# EUROPEAN PATENT APPLICATION

(11) **EP 4 826 590 A1**
(43) Date of publication of application: **21.10.2026**
(21) Application number: 24903669.0
(22) Date of filing: 10.12.2024
(51) Int. Cl.: G06F 30/39, H10D 89/10, G06F 115/08

(54) **DESIGN ASSISTANCE SYSTEM, DESIGN ASSISTANCE DEVICE, AND DESIGN ASSISTANCE METHOD**

(30) Priority: 11.12.2023 JP 2023208729; 07.05.2024 JP 2024075315
(71) Applicant: Flexible Semiconductor Manufacturing Corporation, Tokyo 113-0033 (JP)
(72) Inventor: FURUSAWA, Toshinari, Tokyo 113-0033 (JP)
(74) Representative: HGF
(86) International application number: PCT/JP2024/043542
(87) International publication number: WO 2025/127015

(57) **Abstract**

Provided is a design support system for a semiconductor integrated circuit, the system capable of shortening the product development period in low-volume diversified production. The design support system supports the design of circuits for a semiconductor device manufactured in cooperation with a plurality of functional circuit forming fabs and a post-interconnect process fab. The plurality of functional circuit forming fabs handle, among pre-processes, a pre-interconnect process for independently forming functional circuit blocks corresponding to individual functions, and said fabs stock the functional circuit blocks in a wafer bank. A functional circuit design tool supplying server 1000 selects a functional circuit block corresponding to an individual function for achieving the desired overall function, and supports design for disposing the functional circuit block on a semiconductor substrate. A post-interconnect design tool supplying server 2000 supports pattern design and logic design of a post-interconnect process in which the plurality of functional circuit blocks are selectively connected using a design rules different than that for the pre-interconnect process.

## Description

### TECHNICAL FIELD

The present invention relates to a design support system, a design support apparatus, and a design support method that support a design process for forming a semiconductor integrated circuit on a semiconductor substrate.

### BACKGROUND ART

### (Development Trends of Semiconductor Integrated Circuits)

In semiconductor integrated circuits formed on a semiconductor substrate represented by a silicon (Si) semiconductor, the number of active devices, such as transistors, formed on a single chip, that is, the degree of integration is improved, whereby performance has been improved.

From the beginning when large scale semiconductor integrated circuits (LSIs) were developed and put into practical use, Moore's Law has been used as one indicator of future prediction as an empirical rule that has discussed long-term trends in fabricating and production thereof. Initially, Moore's Law was that "the number of transistors on an integrated circuit doubles every two years". This version of Moore's Law has generally maintained its trend for a long period of time due to improvement in the transistor structure of semiconductor integrated circuits and advances in micro-processing technology, but its limitations have also been pointed out in recent years.

For example, when a typical CMOS (Complementary Metal-Oxide-Semiconductor) transistor is used as an example of a transistor structure, suppression of a short channel effect or the like is one issue in shrinkage in a case where P-channel FET transistors and N-channel FET transistors are planarly formed on a Si substrate. Therefore, FinFET has been developed to improve performance by changing the shape of the silicon substrate from a planar FET (Field Effect Transistor) to a fin (fish fin) shape, and furthermore, a Gate-All-Around nanosheet structure has been developed in which the entire periphery of a channel is surrounded by a gate.

As a result, the leading-edge process currently being developed and put into practical use for a logic IC in the semiconductor integrated circuit has become an ultra-shrinkage technology, sometimes called "2-nm process" or the like.

However, practically, applicable fields of the semiconductor integrated circuits are widely distributed not only to chips for arithmetic processing of artificial intelligence that require such a leading-edge process, but also to those that require the semiconductor integrated circuits fabricated by a process using a previous shrinkage technology.

In addition, an interconnect width/interconnect interval pitch formed using leading-edge EUV (Extreme ultraviolet lithography) lithography is approximately 20 to 30 nm, and the "2 nm process" is a symbolic name used by so-called "area scaling" rather than a planar interconnect processing dimension, as the transistor structure becomes three-dimensional. Practically, depending on the transistor structure or the like, integrated circuits called, for example, "22-28 nm process" with a looser processing accuracy are also widely used in applications such as automobile control and as a "logic processing LSI" mounted behind image sensors.

On the other hand, in the past, the semiconductor integrated circuits have been fabricated in a vertically integrated system by a single company handling everything from a design to processes of forming circuits on the semiconductor substrate (semiconductor wafer) and cutting, bonding, and packaging chips from the semiconductor wafer. However, nowadays, semiconductor integrated circuits are generally fabricated through horizontal division of production roles, involving a fabless company in charge of design, a foundry company in charge of wafer processing (hereinafter simply referred to as "fab"), and an assembly company in charge of assembly.

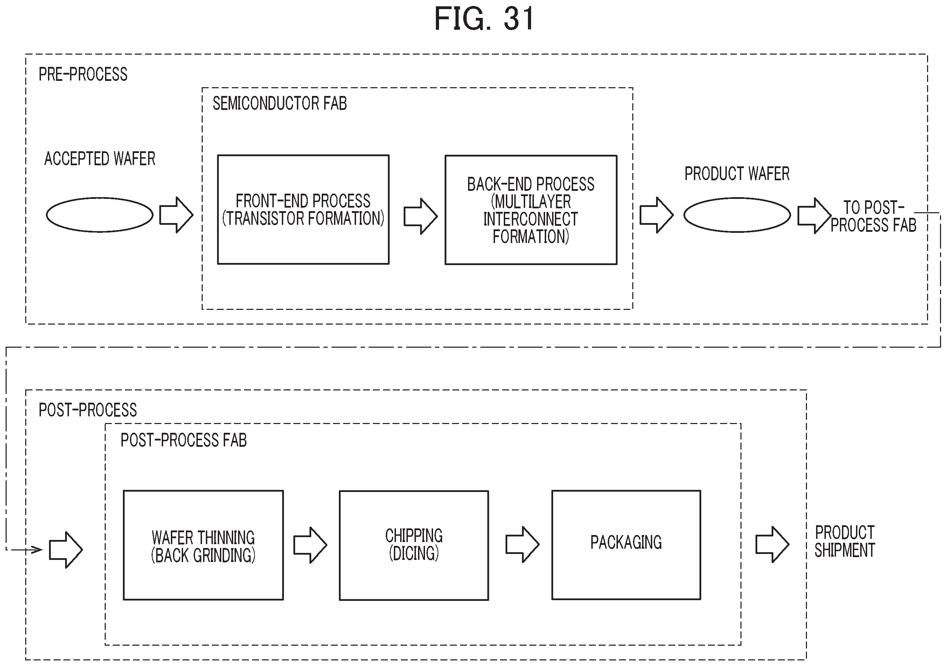

Fig. 31 is a conceptual diagram showing a conventional fabricating process of a semiconductor device.

Referring to Fig. 31, a pre-process is also referred to as a so-called wafer process, which fabricates LSI chips on a silicon wafer. In contrast, a post-process is an assembly process of cutting the LSI chips (also called "dies" in the post-process) individually formed on the wafer and packaging the chips. A workpiece to be worked is in the form of a silicon wafer in the pre-process, but is a silicon wafer, a chip, or a packaged chip in the post-process.

As shown in Fig. 31, it is more common for the pre-process fab and the post-process fab to be separate. Furthermore, in the pre-process, a front-end process mainly refers to a process up to transistor formation, while a back-end process refers to a subsequent interconnect process.

### (ASIC and Cell-based Design)

In particular, as described above, application-specific integrated circuits, rather than general-purpose semiconductor integrated circuits, often do not necessarily need to be fabricated using a leading-edge process. Here, the application-specific integrated circuit is generally called ASIC (application specific integrated circuit), and refers to an integrated circuit in which a plurality of functional circuits are integrated into one for a specific application.

Here, the ASICs are broadly divided into "full custom ICs" where a logic circuit is built from scratch, and "semi-custom ICs" where a basic circuit and a functional block are designed in combination. Naturally, the full custom ICs have a longer development period and higher development costs.

On the other hand, the semi-custom ICs aimed at prevention of these disadvantages include those formed using a "gate array" method in which a semi-finished product with a basic logic circuit laid out is prepared and functions are implemented by specifying interconnect between circuits, and those formed using a "standard cell" method in which componentized circuits (cells) with a certain level of function are combined.

Cell-based ICs (Cell-based Integrated Circuit) designed using the "standard cell" method are configured as integrated circuits in which large-scale circuit blocks (mega cells and macro cells) are mixed, for example, based on standard cells.

A cell-based semi-custom design method has been widely adopted for an ASIC design from the past. This design method improves the efficiency of IC design by combining common design assets (IP: Intellectual Property) registered in a library and by using automatic arrangement and routing tool.

Patent Document 1 discloses a semiconductor integrated circuit designed to include: a plurality of basic cells having a predetermined function by connecting semiconductor elements with internal interconnect; an interconnect region formed on a semiconductor substrate and including external interconnect to connect the basic cells; power interconnect and ground interconnect configured to supply power to the semiconductor elements; a first decoupling capacitor formed by only a pMOS transistor on the semiconductor substrate; and a second decoupling capacitor constituted by two metal layers formed on the semiconductor substrate. A decoupling capacitor cell constituted by the first decoupling capacitor and the second decoupling capacitor is designed to be disposed in an unused region which is not occupied by the basic cells, and to be connected to the power interconnect and the ground interconnect, whereby it is possible to design a cell-based IC that is capable of reducing power consumption and power/ground noise.

On the other hand, in response to enhancement and multifunctionality of the functions to be implemented by the semiconductor integrated circuit, a technology is also used in which chips (dies) produced at one semiconductor fabricating factory and different chips (dies) produced at another semiconductor fabricating factory are assembled into a single package in the post-process. For example, as known technologies, there are "2.5D packaging technology" in which an interposer is used to arrange and connect a plurality of semiconductor chips in parallel for packaging, and "3D packaging technology" in which a plurality of semiconductor chips including memory and microcomputer are stacked and packaged in a three-dimensional direction within a package.

In this way, when the semiconductor chips produced at different semiconductor fabricating factories are combined and packaged, designers use two or more PDKs (Process Design Kits) provided by a foundry that fabricates each chip to design a semiconductor device.

The PDK refers to a compilation of information necessary for a design of custom ICs or analog ICs assuming a specific semiconductor process. Foundries that handle the pre-process in semiconductor manufacturing (including transistor fabricating processes such as diffusion processes) often provide such information/design kits for each process to users such as fabless semiconductor manufacturers or IDM (Integrated Device Manufacturer) designers (see Non-Patent Document 1).

In the custom IC and the analog IC, it is sometimes necessary to design in units of transistors, and the PDK contains information required for this. In other words, the PDK includes symbols on the circuit diagram of the transistor of the process, SPICE (Simulation Program with Integrated Circuit Emphasis) model of the transistor, transistor's mask-level data (parameterized cell data such as PCELL or QCELL data), constraints for mask layout design (so-called DRC (design rule checking) rules), and parasitic parameter extraction rules.

Such information is used in software for IC design called an EDA (electronic design automation) tool. In addition, the PDK often includes a design guideline and a design case (reference design).

For PDKs used for custom IC and analog IC design, the information provided by the foundry to digital LSI designers is often referred to simply as a "design kit". These are also prepared for each process. Various design data (models for EDA tools) of the basic design elements (standard cells or macro cells) of the process are the basis of the design kit. Like PDKs, design guidelines and design cases (reference design) are often included.

Patent Document 2 discloses a PDK creating method and a PDK creating program that are capable of simultaneously designing all layers of a stacked IC. In other words, the PDK creating method in Patent Document 2 includes: acquiring a plurality of design information libraries corresponding to a plurality of chips to be used for a semiconductor device; imparting an identifier that is different for each design information library, to a character string included in the design information library; and integrating the plurality of design information libraries. An identifier that is different for each design information library is imparted to a character string included in the design information library, such that a name or the like of a simulation model can be made different for each design information library. Therefore, the plurality of design information libraries are integrated while avoiding duplication of names or the like of simulation models. It is disclosed that by using thus created design information library, all layers of a stacked IC can be simultaneously designed.

### Citation List

### Patent Documents

Patent Document 1: Japanese Patent Laid-Open No. 2013-201158
Patent Document 2: Japanese Patent Laid-Open No. 2017-156877

### Non-Patent Documents

Non-Patent Document 1:
https://xtech.Nikkei.com/dm/article/WORD/20130115/260353/

### DISCLOSURE OF THE INVENTION

### Problems to be Solved by the Invention

As described above, the ASIC offers advantages such as reduced mounting area, lower power consumption, improved operating speed, and lower unit costs, compared to a standard logic IC or standard memory IC, and a programmable logic device or an FPGA that rewrites a circuit design.

However, even when a semi-custom IC is designed using a standard cell method, since it is necessary to test the device and improve the design after the wafer process is completed, there are still problems of high development costs and a long development period from the perspective of users such as fabless manufacturers.

Furthermore, the priority of fabricating semiconductor integrated circuits with lower design standards tends to be lower in a state where a foundry company focuses on low-mix, high-volume production of semiconductor chips in a leading-edge process or a quasi-leading-edge process with high profit margins. Furthermore, as the semiconductor substrate (wafer) becomes larger in diameter, it is necessary to order a considerable number of chips from the foundry for a single trial production, and thus repeating trial production and improvement processes will increase TAT (turn-around-time), which is a time required to completely finish a product, as well as development costs.

On the other hand, for example, in a semiconductor integrated circuit that takes processing of analog signals from sensors, such as Internet Of Things (IoT), as a premise, diversified small-quantity production is often required.

As a result, the design method and fabricating method of the semiconductor integrated circuit suitable for the diversified small-quantity production are required instead of the product development of one-off, individually designed semiconductor products according to a conventional fabricating model.

The present invention has been made to solve the above-described problems, and aims to provide a design support system, a design support apparatus, and a design support method for a semiconductor integrated circuit, each being capable of shortening the product development period in diversified small-quantity production.

### Means for Solving the Problems

(Item 1) One aspect of the present invention provides a design support system that provides a tool for supporting circuit design of a semiconductor device to be fabricated in cooperation with a plurality of semiconductor fabricating sites, the plurality of semiconductor fabricating sites including a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules, the design support system including a first design support apparatus that supports design of a circuit pattern to be formed on each of a plurality of dies on a semiconductor substrate in the pre-interconnect process, wherein each of the dies includes a plurality of circuit blocks, wherein the plurality of circuit blocks include a plurality of functional circuit blocks that implement a plurality of individual functions constituting an overall function of the semiconductor device on the semiconductor substrate, and the plurality of functional circuit blocks include a plurality of stock circuit blocks having design information previously prepared, based on the first design rules, for circuit patterns corresponding to fabricating processes of each of the first semiconductor fabricating sites, wherein the first design support apparatus includes a first design support unit that selects a predetermined number of stock circuit blocks from the plurality of stock circuit blocks to implement the overall function, and supports design for arranging the selected stock circuit blocks on the semiconductor substrate; and the design support system further comprising a second design support apparatus that supports design of a post-interconnect pattern in a post-interconnect process for selectively connecting the plurality of circuit blocks formed in the pre-interconnect process, wherein the second design support apparatus includes a second design support unit that selects the second semiconductor fabricating site in accordance with the fabricating process for fabricating the selected plurality of stock circuit blocks, and supports logic design and pattern design for the post-interconnect process under the second design rules corresponding to the first design rules of the selected stock circuit blocks.

(Item 2) Preferably, in the configuration of Item 1, the plurality of circuit blocks include a plurality of adjusting circuit blocks that tune performance achieved by each of the functional circuit blocks provided separately from the plurality of functional circuit blocks on the semiconductor substrate.

(Item 3) Preferably, in the configuration of Item 2, the plurality of functional circuit blocks include at least one custom circuit block having design information about a circuit pattern that a user designs based on the first design rules of the selected first semiconductor fabricating site, and the first design support apparatus includes a memory device that stores a correspondence relation that respectively associates the plurality of semiconductor fabricating sites with a plurality of circuit design core groups including the plurality of functional circuit blocks, according to fabricating processes at the plurality of semiconductor fabricating sites, and the first design support unit supports logic design and pattern design for the custom circuit block under the first design rules corresponding to the first semiconductor fabricating site selected according to the circuit design core group.

(Item 4) Preferably, in the configuration of Item 3, the first design support unit prompts the user to design the custom circuit block when determining that the plurality of stock circuit blocks are insufficient to achieve the overall function.

(Item 5) Preferably, in the configuration of any one of Items 1 to 4, the correspondence relation includes a first correspondence relation between each of the plurality of individual functions and a corresponding functional circuit block to constitute the overall function, and a second correspondence relation between performance specifications for the individual functions of the functional circuit blocks and the plurality of circuit design core groups for implementing each of the performance specifications, and each of the circuit design core groups includes design information about the stock circuit block for defining a preset individual circuit pattern capable of implementing the performance specifications for at least one selected from the individual functions.

(Item 6) Preferably, in the configuration of Item 5, the first design support module includes a core group selecting unit that selects the circuit design core group including a combination of the functional circuit blocks capable of implementing the overall function, and a design unit that specifies a first semiconductor fabricating site corresponding to the selected circuit design core group among the plurality of semiconductor fabricating sites, and executes logic design and pattern design based on the first design rules of the specified first semiconductor fabricating site.

(Item 7) Preferably, in the configuration of any one of Items 2 to 5, the first design support apparatus includes a mask pattern generation unit that generates, in at least a portion of a pattern transfer process at the first semiconductor fabricating site, pattern data for an optical mask for performing a lithographic exposure of dies for forming the semiconductor devices on the semiconductor substrate, using a step-and-repeat projection exposure method, and the second design support apparatus includes a drawing data generation unit that generates, in a pattern transfer process at the second semiconductor fabricating site, drawing data for forming interconnect patterns that connect the circuit blocks on the semiconductor substrate.

(Item 8) Preferably, in the configuration of Item 7, the first design rules of the selected stock circuit blocks include an overlap margin at connection portions of via holes for connecting interconnects formed in the pre-interconnect process and interconnects formed in the post-interconnect process based on the second design rules.

(Item 9) Preferably, in the configuration of Item 7 or 8, the drawing data generated by the drawing data generation unit includes data for different interconnect patterns in the post-interconnect process for dies having common patterns of the functional circuit blocks and the adjusting circuit blocks out of the plurality of dies.

(Item 10) Preferably, in the configuration of Item 9, the dies having the common patterns include a first die and a second die, the different interconnect patterns are interconnect patterns that connect the common functional circuit blocks to the adjusting circuit blocks respectively different between the first die and the second die.

(Item 11) Preferably, in the configuration of any one of Items 1 to 10, the plurality of functional circuit blocks include variable functional blocks capable of changing characteristics of the individual functions by the post-interconnect patterns, each of the variable functional blocks includes a basic circuit pattern for implementing the individual function and characteristic adjusting circuit patterns for adjusting the characteristics based on the basic circuit pattern, and the second design support unit supports design for connecting the basic circuit pattern and the characteristic adjusting circuit patterns using the post-interconnect patterns common to a predetermined number of the dies on the semiconductor substrate.

(Item 12) Preferably, in the configuration of Item 11, the characteristic adjusting circuit patterns include a plurality of first passive circuit patterns, each of the first passive circuit patterns being designed to have a first impedance value, and the post-interconnect patterns common to the dies include first post-interconnect patterns that connect to each other the plurality of first passive circuit patterns in the number specified during the design.

(Item 13) Preferably, in the configuration of Item 12, the plurality of circuit blocks further include a plurality of adjusting circuit blocks for tuning performance achieved by each of the functional circuit blocks, the plurality of adjusting circuit blocks are provided on the semiconductor substrate separately from the plurality of functional circuit blocks.

(Item 14) Preferably, in the configuration of Item 13, the plurality of adjusting circuit blocks include a plurality of second passive circuit patterns, each of the second passive circuit patterns being designed to have a second impedance value smaller than the first impedance value, and the post-interconnect patterns include the first post-interconnect patterns common to the predetermined number of dies, and second post-interconnect patterns that differ among the predetermined number of dies and connect the second passive circuit patterns to the first passive circuit patterns.

(Item 15) Preferably, in the configuration of any one of Items 11 to 14, the basic circuit pattern is an analog circuit.

(Item 16) Another aspect of the present invention provides a design support method for allowing a computer to operate a tool for supporting circuit design of a semiconductor device fabricated in cooperation with a plurality of semiconductor fabricating sites, the plurality of semiconductor fabricating sites including a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules, the computer including a processor and a memory device, the memory device storing design information about a plurality of circuit blocks, the plurality of circuit blocks including a plurality of functional circuit blocks that implement a plurality of individual functions constituting an overall function of the semiconductor device on the semiconductor substrate, the plurality of functional circuit blocks including a plurality of stock circuit blocks having design information previously prepared, based on the first design rules, for circuit patterns corresponding to fabricating processes of each of the first semiconductor fabricating sites, the design support method comprising the steps of selecting, by the processor, a predetermined number of stock circuit blocks from the plurality of stock circuit blocks to implement the overall function and supporting design of circuit patterns in the pre-interconnect process for forming a plurality of circuit blocks on the semiconductor substrate; and supporting design of post-interconnect patterns in a post-interconnect process for selectively connecting the plurality of circuit blocks formed in the pre-interconnect process, wherein the supporting the design of the post-interconnect patterns includes selecting the second semiconductor fabricating site according to a fabricating process for fabricating the selected plurality of stock circuit blocks, and supporting logic design and pattern design for the post-interconnect process under the second design rules corresponding to the first design rules of the selected stock circuit blocks.

(Item 17) Further another aspect of the present invention provides a design support apparatus that supports a design of a pre-interconnect process in a design support system that provides a tool for supporting circuit design of a semiconductor device fabricated in cooperation with a plurality of semiconductor fabricating sites, wherein the plurality of semiconductor fabricating sites include a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules, the design support apparatus including a memory device that stores design information about a plurality of circuit blocks necessary for design support, wherein the plurality of circuit blocks include a plurality of functional circuit blocks that implement a plurality of individual functions constituting an overall function of the semiconductor device on the semiconductor substrate, and the plurality of functional circuit blocks include a plurality of stock circuit blocks having design information previously prepared, based on the first design rules, for circuit patterns corresponding to fabricating processes of each of the first semiconductor fabricating sites, the design support apparatus further including a processor that executes design support processing based on the information stored in the memory device, and wherein the processor is configured to select a predetermined number of stock circuit blocks from the plurality of stock circuit blocks to implement the overall function and support design for arranging the circuit patterns in the pre-interconnect process on the semiconductor substrate; and store design information about an arrangement of the circuit patterns in the pre-interconnect process into a predetermined shared storage region for a design process of a post-interconnect process to selectively connect a plurality of circuit blocks formed in the pre-interconnect process.

(Item 18) Preferably, in the configuration of Item 17, the design support apparatus includes a mask pattern generation unit that generates, in at least a portion of a pattern transfer process at the first semiconductor fabricating site, pattern data for an optical mask for performing a lithographic exposure of dies for forming the semiconductor devices on the semiconductor substrate, using a step-and-repeat projection exposure method, and a pattern transfer process at the second semiconductor fabricating site is a process of directly drawing interconnect patterns that connect the circuit blocks on the semiconductor substrate.

(Item 19) Preferably, in the configuration of Item 18, the first design rules of the selected stock circuit blocks include an overlap margin at connection portions of via holes for connecting interconnects formed in the pre-interconnect process and interconnects formed in the post-interconnect process based on the second design rules.

(Item 20) Still further another aspect of the present invention provides a design support apparatus that supports design of a post-interconnect process corresponding to design of pre-interconnect process in a design support system that provides a tool for supporting circuit design of a semiconductor device fabricated in cooperation with a plurality of semiconductor fabricating sites, wherein the plurality of semiconductor fabricating sites include a plurality of first semiconductor fabricating sites that are in charge of pre-interconnect process in a first fabricating process under first design rules, and at least one second semiconductor fabricating site that is in charge of post-interconnect process in a second fabricating process under second design rules different from the first design rules,
the design support apparatus including a memory device that stores stock information about a plurality of semiconductor substrates stocked after completion of formation of a plurality of circuit blocks for each of a plurality of dies in the pre-interconnect process, wherein the plurality of circuit blocks include, on the semiconductor substrate, a plurality of functional circuit blocks that implement a plurality of individual functions constituting an overall function of the semiconductor device, and the plurality of functional circuit blocks include a plurality of stock circuit blocks having design information previously prepared, based on the first design rules, for circuit patterns corresponding to fabricating processes of each of the first semiconductor fabricating sites, wherein the stocked plurality of semiconductor substrates are semiconductor substrates having circuit patterns formed in the pre-interconnect process on the semiconductor substrates for a predetermined number of stock circuit blocks selected from the plurality of stock circuit blocks to implement the overall function, the design support apparatus further including a processor that executes design support processing based on the information stored in the memory device, and wherein the processor is configured to select, based on the stock information, the semiconductor substrates to be processed in the post-interconnect process; and support design of design process of post-interconnect patterns of post-interconnect process for selectively connecting a plurality of circuit blocks formed in the pre-interconnect process.

(Item 21) Preferably, in the configuration of Item 20, the design support apparatus includes a direct drawing pattern generation unit that generates, in a pattern transfer process at the second semiconductor fabricating site, direct drawing data for transferring interconnect patterns of dies on the semiconductor substrate, the semiconductor devices being formed on the dies using a direct drawing method.

(Item 22) Preferably, in the configuration of Item 20 or 21, the plurality of functional circuit blocks include variable functional blocks capable of changing characteristics of the individual functions by the post-interconnect patterns,
each of the variable functional blocks includes a basic circuit pattern for implementing the individual functions and characteristic adjusting circuit patterns for adjusting the characteristics based on the basic circuit pattern, and the design support unit supports design for connecting the basic circuit pattern and the characteristic adjusting circuit patterns using the post-interconnect pattern common to a predetermined number of dies on the semiconductor substrate.

(Item 23) Preferably, in the configuration of Item 22, the characteristic adjusting circuit patterns include a plurality of first passive circuit patterns, each of the first passive circuit patterns being designed to have a first impedance value, and the post-interconnect patterns common to the dies include first post-interconnect patterns that connect the plurality of first passive circuit patterns to each other in the number specified during the design.

(Item 24) Preferably, in the configuration of Item 23, the plurality of circuit blocks further include a plurality of adjusting circuit blocks for tuning performance achieved by each of the functional circuit blocks, and the plurality of adjusting circuit blocks are provided on the semiconductor substrate separately from the plurality of functional circuit blocks.

(Item 25) Preferably, in the configuration of Item 24, the plurality of adjusting circuit blocks include a plurality of second passive circuit patterns, each of the second passive circuit patterns being designed to have a second impedance value smaller than the first impedance value, and the post-interconnect patterns include the first post-interconnect patterns common to the predetermined number of dies, and second post-interconnect patterns that differ among the predetermined number of dies and connect the second passive circuit pattern to the first passive circuit patterns.

### Effects of the Invention

According to the present invention, it is possible to provide a design support system, a design support apparatus, and a design support method for a semiconductor integrated circuit, each being capable of shortening the product development period in diversified small-quantity production.

### BRIEF DESCRIPTION OF THE DRAWINGS

Fig. 1 is a conceptual diagram showing an overview of a fabricating flow of a semiconductor device according to a first embodiment;
Fig. 2 is a diagram showing an example of a cross-sectional structure of the semiconductor device according to the fabricating flow of the present embodiment;
Fig. 3 is a conceptual diagram illustrating a fabricating process of the semiconductor device shown in Fig. 2;
Fig. 4 is a conceptual diagram illustrating a configuration of a design platform of a design support system according to the present embodiment;
Fig. 5 is a conceptual diagram illustrating a server device extracted from the design platform;
Fig. 6 is a conceptual diagram showing an overview of a configuration of a function-fab relation DB 1500.2;
Fig. 7 is a diagram illustrating details of the configuration of the function-fab relation DB 1500.2;
Fig. 8 is a diagram illustrating details of the configuration of the function-fab relation DB 1500.2;
Fig. 9 is a diagram illustrating details of the configuration of the function-fab relation DB 1500.2;
Fig. 10 is a diagram illustrating details of the configuration of the function-fab relation DB 1500.2;
Fig. 11 is a diagram showing a configuration of a functional circuit design tool providing server 1000, a post-interconnect design tool providing server 2000, and designer terminals 5000.1 to 5000.P;
Fig. 12 is a functional block diagram showing the configuration of the functional circuit design tool providing server 1000;
Fig. 13 is a functional block diagram showing the configuration of the post-interconnect design tool providing server 2000;
Fig. 14 is a block diagram illustrating a hardware configuration of the functional circuit design tool providing server 1000;
Fig. 15 is a flowchart illustrating an operation of the functional circuit design tool providing server 1000;
Fig. 16 is a flowchart illustrating an operation of the functional circuit design tool providing server 1000;
Fig. 17 is a flowchart illustrating an operation of the post-interconnect design tool providing server 2000;
Fig. 18 is a view illustrating a plurality of dies formed on a semiconductor substrate after a pre-interconnect process;
Fig. 19 is a view illustrating a plurality of dies formed on a semiconductor substrate after a post-interconnect process;
Fig. 20 is a view showing design rules for uppermost-layer interconnect in an interconnect group during the pre-interconnect process, and design rules for a contact portion between uppermost-layer interconnect M1 and interconnect M2 formed during the post-interconnect process;
Fig. 21 is a conceptual diagram showing various examples of changes in pattern of contact portions between the uppermost-layer interconnect and the interconnect formed in the post-interconnect process;
Fig. 22 is a conceptual diagram showing a comparison of flexibility of design method in a digital circuit and an analog circuit;
Fig. 23 is a diagram showing a relation between "function", "characteristics", "characteristic values" realized by a functional circuit, using an operational amplifier as an example;
Fig. 24 is a diagram showing three design conditions with respect to an "amplification amplifier";
Fig. 25 is a circuit diagram showing a circuit configuration when circuits of three conditions shown in Fig. 24 are designed using a full custom method;
Fig. 26 is a circuit diagram showing a circuit configuration when the circuits of three conditions shown in Fig. 24 are designed using a design method of a second embodiment;
Fig. 27 is a conceptual diagram showing a functional block and an adjusting circuit block for adjusting performance of the functional block;
Fig. 28 is a conceptual diagram showing a course of trial production in a case of using a design method according to the second embodiment, in comparison with a conventional course of trial production;
Fig. 29 is a conceptual diagram illustrating an aspect in which design data is reused or utilized again within or between foundries;
Fig. 30 is a conceptual diagram showing an effect according to the design method of the embodiment; and
Fig. 31 is a conceptual diagram showing a conventional fabricating process of a semiconductor device.

### PREFERRED MODE FOR CARRYING OUT THE INVENTION

Hereinafter, configurations of a semiconductor integrated circuit design support system, a design support apparatus, and a design support method according to embodiments of the present invention will be described. In the following embodiments, components and processing steps denoted by the same reference numerals are identical or equivalent, and will not be described repeatedly unless necessary.

In the following description, software for supporting a design of a semiconductor integrated circuit, which is performed on a computer of the design support apparatus of the present invention, is described as a computer program that is installed on a single computer device to execute circuit design support.

However, processing of the design support system may be distributed across a plurality of computer devices, and the number of processors, which execute computer processing, may be one or more. Furthermore, the processing of the design support system is not limited to programs installed on such general-purpose computer devices, but may generally be realized as a dedicated arithmetic processing device in which a processor and a memory device are combined.

### (Definition of Terms)

Definitions of terms used in the description are as follows.

1) "Semiconductor wafer": Typically, this refers to a wafer cut and shaped from a single crystal silicon (Si) ingot to a predetermined thickness and diameter. However, the type of semiconductor is not limited to silicon, and may include other semiconductors; and further, an insulating wafer may be used as a substrate for the wafer, and a semiconductor layer may be grown on a surface of the insulating wafer by a predetermined crystal growth method.
2) "Through-hole": This is a general term for parts that provide conductivity between interconnect layers of gate interconnects and metal interconnects in a semiconductor device. Examples include contact holes connecting a silicon substrate and upper layer interconnects, cell contacts connecting capacitor electrodes to the substrate or interconnects, and via holes connecting metal interconnects.
3) "Pre-process": This is a process of forming a plurality of integrated circuit chips (dies) on a semiconductor wafer, each of the chips including a plurality of active elements (for example, transistors) to achieve the overall function of a product to be fabricated.
4) "First semiconductor fabricating site" and "second semiconductor fabricating site": The "first semiconductor fabricating site" is a site where a "front-end process" and a "pre-interconnect process", which will be described below, are carried out in a wafer process for fabricating a semiconductor device as a target. The "second semiconductor fabricating site" is a site where a "post-interconnect process", which will be described below, is carried out in the wafer process of the semiconductor device to be fabricated. The "first semiconductor fabricating site" and the "second semiconductor fabricating site" may be separate factories, respectively, for example, a "first semiconductor factory" and a "second semiconductor factory". Alternatively, at least one of a plurality of "first semiconductor fabricating sites" and the "second semiconductor fabricating site" may be located in different areas (for example, in different buildings) within the same factory site. However, as will be described below, "semi-finished wafers" fabricated at the "first semiconductor fabricating site" are first stocked as an inventory in a "wafer bank", and then a wafer selected by a circuit designer in the post-interconnect process is sent to a fabricating process of the "second semiconductor fabricating site". Furthermore, the "first semiconductor fabricating site" and the "second semiconductor fabricating site" may employ different design rules, respectively, and use different interconnect formation process technologies, respectively.
5) "Pre-interconnect process": This process includes, within the pre-process, a process of forming active elements (for example, transistors) on a semiconductor wafer at the first semiconductor fabricating site (a front-end process), and a process of electrically connecting the plurality of transistors using an interconnect layer through contact holes opened in an insulating layer formed on the transistors (a former half of a back-end process). The process may include at least an interconnect process via cell contacts, and may also include a metal interconnect process via via holes. In the pre-interconnect process, a plurality of various types of semiconductor circuits are formed on the semiconductor substrate, each of the semiconductor circuits corresponding to an individual function as an electrical circuit and including both a functional circuit and an adjusting circuit.
6) "Front-end process": This is a process of forming active elements (for example, transistors) on a semiconductor wafer in the pre-process, and includes a metal embedding process when a metal is embedded in contact holes of the transistors (for example, formation of W plugs).
7) "Back-end process": This is a process of forming multilayer interconnect after the front-end process in the pre-process. In a silicon semiconductor process, as the metal interconnect of multilayer interconnect, aluminum interconnect (including an alloy with Al as a main material) is often used for the lower layer interconnect, and copper interconnect is often used for the upper layer interconnect. In addition, the copper interconnect is often formed using a so-called "dual damascene process". All interconnect layers in the back-end process may be aluminum interconnect. Alternatively, all interconnect layers in the back-end process may be copper interconnect formed using the dual damascene process. However, the multilayer interconnect formation process is not limited to these examples.
8) "Functional circuit": This refers to a plurality of circuits that respectively realize, on a semiconductor substrate, a plurality of individual functions constituting the overall function of the semiconductor device to be fabricated. The functional circuit may include a "variable functional circuit" in which individual functions and characteristics can be changed by a post-interconnect pattern. The variable functional circuit includes a basic circuit and a characteristic adjusting circuit. The basic circuit and the characteristic adjusting circuit are selectively connected using the post-interconnect pattern, whereby it is possible to realize different circuit functions and circuit characteristics. The basic circuit is not particularly limited, but includes active circuits, for example, operational amplifiers and diodes. The characteristic adjusting circuit is a passive circuit, and includes resistors, capacitors, and inductors, for example. The "active circuit" is a circuit including active elements that performs an active function of amplifying, rectifying, or converting electrical energy to be supplied. The "passive circuit" is a circuit including only at least one passive element that performs a passive operation of consuming, storing, or releasing the electrical energy to be supplied.
9) "Adjusting circuit": This refers to a plurality of circuits provided on a semiconductor substrate, separate from a plurality of functional circuit blocks, and used to tune the performance achieved by the functional circuit blocks. The adjusting circuit may include active elements such as transistors (for example, a single MOSFET) in addition to passive circuits, as long as its purpose is to tune (fine-tune) the performance of the functional circuit. Furthermore, the adjusting circuit may be realized as an assembly of passive elements and transistors.
10) "Post-interconnect process": This refers to a latter half of the back-end process within the pre-process, and a process of forming interconnect that connects the functional circuits and the adjusting circuits formed on the semiconductor chips at the second semiconductor fabricating site different from the first semiconductor fabricating site after the process (front-end process) of fabricating transistors on the semiconductor wafer and the pre-interconnect process are completed within the first semiconductor fabricating site. Although not being particularly limited, the post-interconnect process may include a process of performing, as many times as necessary, a process of forming an interlayer insulating film using a direct drawing technique with a photosensitive organic insulating film and a process of forming copper interconnect using a dual damascene technique.
11) "Post-process": This includes, in a post-process foundry, a process of cutting semiconductor chips (dies) from a wafer on which a semiconductor circuit is formed in the pre-process (front-end process + pre-interconnect process + post-interconnect process), performing bonding and assembly into packages, and inspecting a product before a shipment. Furthermore, the process may include a process of forming plated interconnect, which serves as a base for bump formation to create a flip-chip configuration or a laminate structure, on the bonding pad formed in the pre-process. In other words, in the post-process, a chip of a laminate structure may be formed in which wafers are connected using a wafer-based flip chip connection. The process of forming the plated interconnect may be included in the pre-process.
12) "Design rule": In the description, this refers to a minimum design width of interconnect in a wafer process.
13) "Semi-finished wafer": This refers to a semiconductor substrate (wafer) that, after the completion of the pre-interconnect process, is temporarily sent out from the first semiconductor fabricating site and stocked in a predetermined storage area. Therefore, a plurality of functional circuits and at least one adjusting circuit are formed inside the chip formed on the semiconductor substrate by the front-end process and the pre-interconnect process. Preferably, a protective film, as described below, is formed over substantially the entire surface, and a plurality of through-holes may be formed in the protective film to make connections by interconnect in the post-interconnect process.
14) "Stock": This means that the semi-finished wafers after the completion of the pre-interconnect process are sent out from the first semiconductor fabricating site and are temporarily stored in the predetermined storage area. When the "first semiconductor fabricating site" and the "second semiconductor fabricating site" are a "first semiconductor factory" and a "second semiconductor factory" which are operated by different business operators, respectively, this means that the semi-finished wafers are shipped from the first semiconductor factory and stored as inventory in the storage area (a storage warehouse, for example). The storage area is called a "wafer bank".

While the above definitions of terms are based on a typical technology at the time of filing this application, if the technical content and process flow of semiconductor fabricating processes are improved or enhanced as technology advances, the foregoing definitions do not preclude modified interpretation to the extent according to the spirit of the present invention which will be described below in the description.

In a first embodiment to be described below, a silicon semiconductor is used as an example of a semiconductor substrate, and a planar FET transistor is used as an example of an active element formed on the semiconductor substrate.

Furthermore, the pre-interconnect process will be described as a process in which aluminum interconnect is used as lower layer interconnect, and the post-interconnect process will be described as a process of forming an interlayer insulating film using a direct drawing technique with a photosensitive organic insulating film and a process of forming copper interconnect using a dual damascene technique. However, as described above, the multilayer interconnect process is not limited to such a process flow. As an example, the "first semiconductor fabricating site" and the "second semiconductor fabricating site" will be described as separate factories, namely, the "first semiconductor factory" and the "second semiconductor factory".

### [First Embodiment]

### (Overview of Fabricating Flow according to First Embodiment)

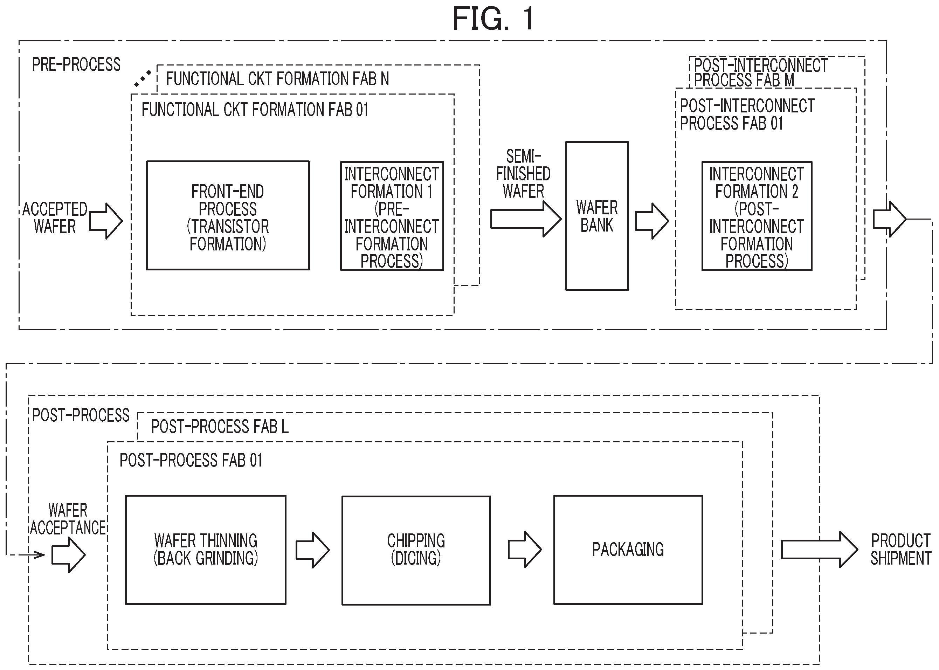

Fig. 1 is a conceptual diagram showing an overview of a fabricating flow of a semiconductor device according to a first embodiment.

Referring to Fig. 1, after a wafer is received, a former half of a pre-process (front-end process and pre-interconnect formation process) is conducted by a plurality of semiconductor fabricating factories, each corresponding to one of a plurality of functional circuit formation fabs 01 to N (N ≥ 2, being a natural number).

As will be described below, since each of the functional circuit formation fabs 01 to N forms semiconductor chips on a silicon wafer using different semiconductor process technologies, even in the same design, each functional circuit does not necessarily have the same characteristics or have the same performance. Furthermore, the functional circuit formation fabs 01 to N differ in the performance of the functional circuits capable of being fabricated and also differ in types of the functional circuits capable of being fabricated. Accordingly, types and characteristics of adjusting circuits formed in the functional circuit formation fabs 01 to N will also differ from each other.

When the pre-interconnect formation process is completed in the functional circuit formation fabs 01 to N, a "functional circuit" and an "adjusting circuit" corresponding to the fabricating process of each of the functional circuit formation fabs 01 to N are formed on the semiconductor wafer.

In this way, in the semiconductor wafer shipped from the functional circuit formation fabs 01 to N, functional circuits that realize individual functions and adjusting circuits for tuning the functional circuits are formed, but interconnect for connecting the functional circuits to each other, connecting the functional circuits to the adjusting circuits, and connecting the adjusting circuits to each other are not formed. Therefore, a "semiconductor device" to be finally fabricated has not yet been formed on the semiconductor wafer, and only individual components have been formed, whereby the semiconductor wafers shipped from the functional circuit formation fabs 01 to N are called "semi-finished wafers".

The semi-finished wafers shipped from the plurality of functional circuit formation fabs 01 to N are temporarily stored as inventory in a place called a wafer bank. The semi-finished wafers stored in the wafer bank are called "stock semiconductor wafers".

For a designer of the "semiconductor device" to be finally fabricated, it is possible to fabricate the semiconductor device designed by the designer and intended to be outsourced for fabrication by connecting the functional circuits and the adjusting circuits, which are already formed on the wafers stored in the wafer bank, using interconnect in some cases. In these cases, it is possible to fabricate a trial product by omitting the time required for the pre-interconnect process.

In any one of a plurality of post-interconnect process foundries 01 to M (M ≥ 1, being a natural number), it is possible to complete the trial production of the "semiconductor device" by connecting post interconnect onto the stock semiconductor wafers stored in the wafer bank.

Moreover, as will be described below, the post-interconnect formation process can be configured to use a direct drawing technique for forming an interlayer insulating film using a photosensitive organic insulating film and a dual damascene technique for forming copper interconnect.

At this time, the pre-interconnect formation process can be, for example, a pattern transfer process using a stepper with a reticle or a step-and-repeat projection exposure method using reduction projection by a scanner. As a result, a combination of the functional circuit and the adjusting circuit created up to the pre-interconnect process can include a plurality of patterns (for example, two types of combination patterns) within the same reticle. However, when viewed as a whole of the semiconductor wafer, the same pattern of combinations of the functional circuits and the adjusting circuits is repeated for the number of exposure steps using the reticle. Here, the "step" refers to a process of exposing the reticle in split projection exposure. In the stepper, a square area of the reticle is exposed in one step with a single light irradiation (one shot), whereas, in the scanner, the reticle and the wafer are synchronized, and irradiation areas with a narrow and long slit shape are irradiated with light and exposed while being moved in a lateral direction.

Although not being particularly limited, for example, it is assumed as an example that a plurality of functional circuits and a plurality of adjusting circuits are formed on the same die, and that one reticle includes a plurality of chips (dies). In this case, for example, the combination of the functional circuits is common across the plurality of chips (dies). However, the way in which the adjusting circuits are connected can be changed between the dies to match the characteristics and performance of the functional circuits. As a result, it is possible to fabricate a semiconductor device with desired performance by changing a "selection and connection method of the adjusting circuits to be combined with the functional circuits out of the adjusting circuits" within a single wafer. However, in this case, a range of possible changes to the selection and connection of the adjusting circuits is limited at least to the number of chips (dies) in the reticle. In other words, the range of changes in this case is generally limited to the number of chips in a single reticle.

On the other hand, although not being particularly limited in this embodiment, a lithography process (a pattern transfer process) for post-interconnect is a process that uses a direct drawing process. When the direct drawing process is adopted, it is ultimately possible to form different post-interconnect patterns based on a design of the designer for each semiconductor chip fabricated on a single semiconductor wafer. In this case, like the pre-interconnect process, there is no restriction that interconnect patterns should be common between exposure steps for the chips (dies) present within the reticle.

In other words, for chips (dies) located at a specific position within one exposure step, when the whole process including the post-interconnect process is exposed using a stepper or a scanner with a reticle as a mask, the post-interconnect patterns will be the same across different steps. In this case, between the different steps, the chips (dies) at specific positions within the reticle have common functional circuit patterns and adjusting circuit patterns.

In contrast, when the post-interconnect process is performed by direct drawing, it is possible to have different post-interconnect connection patterns between the chips (dies) on the semiconductor substrate.

As a result, within a single wafer, the direct drawing process allows more diverse variations in trial production, varying both the "combination of functional circuits" and the "selection and connection method of adjusting circuits out of the plurality of adjusting circuits to be combined with the functional circuits", compared to the step-and-repeat projection exposure method.

As a result, as compared to a case of using the step-and-repeat projection exposure method, when the post-interconnect process is performed by the direct drawing, it is more desirable to optimize the connection method (post-interconnect pattern) of the post-interconnect for a single trial product lot.

When multilayer interconnect is performed in the pre-interconnect process, uppermost-layer interconnect in the pre-interconnect process is interconnect connected to the interconnect in the post-interconnect process. For example, it is also possible to use a configuration in which a direct drawing technique is used for lithography to form an etching mask of the uppermost-layer interconnect (for example: Al interconnect). In this case, the requirements for the minimum dimensions of the lithography for the uppermost-layer interconnect in the pre-interconnect process are less stringent than those for a lower layer interconnect. On the other hand, using the direct drawing technique in the pre-interconnect process offers advantages such as a greater degree of freedom in pattern variations during an initial trial production and a greater degree of freedom in pattern revision after the initial trial production. In the pre-interconnect process, the interconnect layers that utilize the direct drawing technique are not limited to the uppermost-layer interconnect only. A plurality of interconnect layers on the upper layer side in the pre-interconnect process may be formed using the direct drawing technique.

Therefore, when the semiconductor device is fabricated using the fabricating flow shown in Fig. 1, it is possible to provide a circuit design method that allows for quick and low-cost countermeasures against issues identified during the initial fabrication of the semiconductor integrated circuit.

In other words, depending on the issues identified in the initial fabrication, some issues may be addressed by changing the interconnect pattern in the post-interconnect process, and, in this case, in the second and subsequent fabrication, it is possible to reduce the range of change by utilizing the results from the first trial production, in which the post-interconnect pattern is significantly varied, whereby it is possible to fabricate semiconductor chips, on which a desired semiconductor integrated circuit is mounted, with high yield.

Here, for example, the issues, which may be identified during the initial fabrication, are expected as follows:
i) Performance degradation (parasitic elements, parasitic capacitance, noise, and the like) due to items not adequately described in the specifications
ii) Items that cannot be adequately verified by simulation alone (circuit oscillation, input offset voltage, and the like)
iii) Items that are identified due to insufficient simulation resulting from inadequate parasitic element configuration or thermal design (thermal runaway and the like)
iv) Items that are identified after the fabricating of the semiconductor integrated circuit (ESD (Electro-Static-Discharge) tolerance, EMI (Electro Magnetic Interference) tolerance, and the like)
v) Performance degradation due to mismatch with process performance (component performance) on a fabricating line

In the fabricating flow shown in Fig. 1, the functional circuit and the adjusting circuit are arranged independently so that the above-described issues can be resolved by revising the design after the issues are identified, and the connection between the functional circuit and the adjusting circuit can be freely changed through the post-interconnect process.

Moreover, since such changes are made only during the post-interconnect process, there is a higher possibility that a change of design to resolve the issues can resolve the issues before the design is completely revised.

As a result, development period and costs can be reduced.

### (Example of Cross-Sectional Structure and Details of Fabricating Flow according to Present Embodiment)

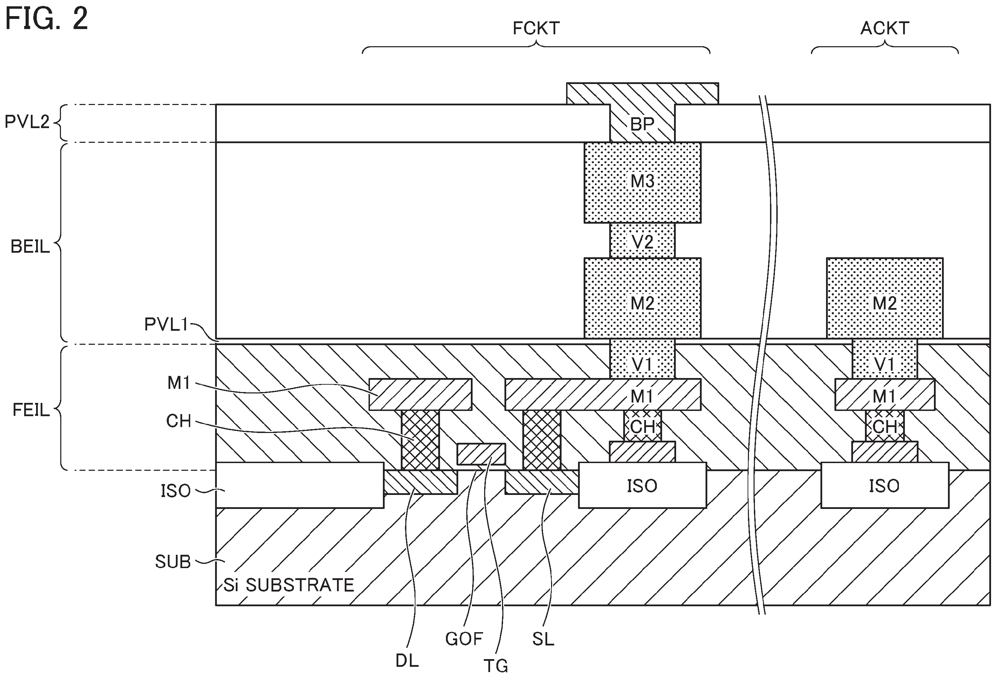

Fig. 2 is a diagram showing an example of a cross-sectional structure of a semiconductor device according to the fabricating flow of the present embodiment.

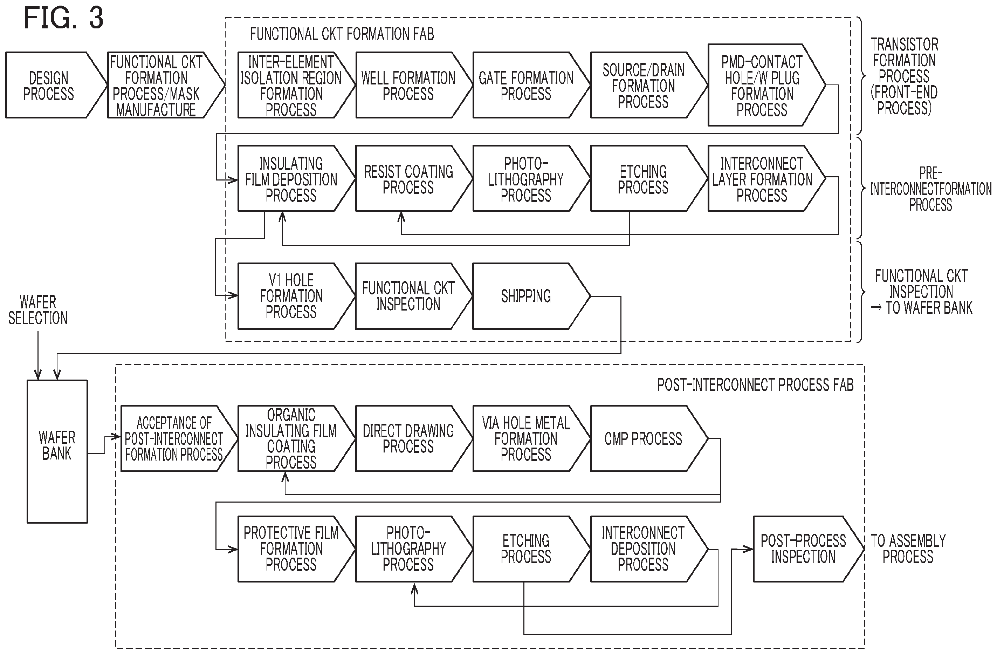

Fig. 3 is a conceptual diagram illustrating a fabricating process of the semiconductor device shown in Fig. 2.

Referring to Figs. 2 and 3, in a design process, the functional circuits corresponding to the individual functions necessary to achieve the overall function of the semiconductor device to be fabricated, and the adjusting circuits corresponding to the functional circuits are designed according to procedures to be described below, and thus a photolithography mask for the processes (front-end process + pre-interconnect process) carried out in the functional circuit formation fab is created. As described above, such a photolithography mask can be used as a reticle in an optical stepper and a scanner.

As shown in Fig. 2, an adjusting circuit ACKT is provided on a semiconductor substrate SUB separately from a functional circuit FCKT, and is a circuit for tuning the performance realized by the functional circuit ACKT.

When the mask is created and the semiconductor substrate SUB (bare wafer) is received at the functional circuit formation fab, a surface of a silicon wafer is thermally oxidized through a predetermined cleaning and drying process, a silicon nitride film is formed on an upper layer of an oxide film using, for example, a low-pressure CVD (Chemical Vapor Deposition) method, and then a shallow trench is etched using split projection exposure lithography to form a buried oxide film. The buried oxide film is formed by a CVD method, for example. Subsequently, the buried oxide film is flattened using a CMP (Chemical Mechanical Polishing) process, and then the oxide film and the nitride film are removed to form an element isolation region ISO. This is called a shallow trench isolation (STI) technique. Depending on processing dimensions, other methods for forming element isolation regions, for example, LOCOS (Local Oxidation of Silicon) may also be used.

Subsequently, a sacrificial oxide film is formed, and then a well region for forming a MOSFET is formed by ion implantation and activation annealing. In the case of CMOS, a p-type P-well and an n-type N-well are formed to create a twin well, but in Fig. 2, a single well is assumed.

Next, a gate oxide film GOF, and a polysilicon film and a silicide film serving as a gate electrode material TG are stacked together, and a resist pattern of a gate electrode is formed using photolithography, which is a step-and-repeat projection exposure method to form a gate electrode by etching. Then, after the resist is removed, a drain region DL and a source region SL are formed by ion implantation and annealing, for example, using self-alignment technique.

Subsequently, an etching stopper layer and an interlayer insulating film, known as a PMD (Pre Metal Dielectrics) film, are deposited, for example, using a plasma CVD technique. Here, flattening is also performed using a CMP technique.

Then, a resist pattern is formed using photolithography which is a step-and-repeat projection exposure method, and contact holes are etched into the source region SL and the drain region DL. After the resist is removed, a glue layer (such as TiN/Ti) and a blanket W film are formed in the contact holes by a sputtering method and a low-pressure CVD method, respectively. When excess W film and glue layer on the PMD film are removed by a CMP process, a W plug CH is formed in the contact holes. Although not shown in the drawing, W plugs are also formed simultaneously in the contact holes for the gate electrode.

Then, as first layer metal interconnect, for example, an aluminum interconnect layer is formed by sputtering, and a resist pattern is formed by photolithography which is a step-and-repeat projection exposure method. A pattern of first layer metal interconnect M1 is formed by dry etching. After the resist is removed, an insulating film layer is formed with a silicon oxide film, and is then flattened again using a CMP technique, whereby a silicon nitride film PLV1 is then formed as a passivation film in the pre-interconnect process.

Although not being particularly limited, the silicon nitride film PLV1 functions as a protective film or a passivation film for a circuit on a semi-finished semiconductor substrate after the pre-interconnect process is completed.

When the protective film is formed, moisture from the outside air and impurities such as sodium can be prevented from entering the circuit on the semi-finished semiconductor substrate.

Subsequently, via holes V1 are formed in the uppermost-layer interconnect of the pre-interconnect process (in this example, the first layer metal interconnect M1) to connect metal interconnect M2 in the post-interconnect process. The via holes V1 can be formed by dry etching of the resist pattern using photolithography which is a step-and-repeat projection exposure method.

After the via holes V1 are formed, the resist is removed.

Up to this point, the front-end process and the pre-interconnect process are completed. Subsequently, after a test on electrical characteristics is performed on the functional circuit and the adjusting circuit which are formed, information about test results is stored in a predetermined common memory region (for example, a memory device 2300 to be described below), and the wafer is shipped to the wafer bank as a stock semiconductor wafer. Since the silicon nitride film PLV1 is formed on the surface, the influence on reliability can be prevented even when the wafer is stocked in this manner.

Therefore, the semi-finished semiconductor substrate shipped to the wafer bank does not achieve its overall function at the time of shipment, thereby being referred to as the "semi-finished wafer" as described above.

Although not being particularly limited, the via holes V1 may be formed at the beginning of the post-interconnect process. For example, in the pre-interconnect process, only the via hole V1 in a TEG (Test Element Group) section is opened to test the circuit, and the via hole V1 at the connection point with the interconnect in the post-interconnect process may be opened by etching in the post-interconnect process. Such etching is performed, for example, by dry etching in which an etching resist mask is formed by exposure using a photomask or exposure using a direct drawing technique.

A design process (not shown) for the post-interconnect is performed based on the test results, and the stock semiconductor wafer suitable for forming the semiconductor integrated circuit as a product as assumed by the designer is searched and selected in the wafer bank, and is shipped to the post-interconnect process fab.

As will be described below, the designer can select a fab capable of forming a desired semiconductor integrated circuit from the plurality of fabs.

When the stock semiconductor wafer, which includes the via holes V1 formed in the pre-interconnect process, is received by the post-interconnect process fab, an interlayer insulating film in the post-interconnect process is formed with a photosensitive organic insulating film. Although not being particularly limited, a photosensitive polyimide or the like can be used as the photosensitive organic insulating film.

For the photosensitive polyimide, direct drawing is performed in the post-interconnect process using a laser direct drawing apparatus, for example. The direct drawing can be simply performed under atmospheric pressure by the laser direct drawing, and is suitable as an interconnect formation process in the post-interconnect process. After the direct drawing, unwanted portions of the photosensitive polyimide are removed by a developing process to form the patterns of the interconnect M2 corresponding to the via holes V1, and to cure the patterns.

However, in the direct drawing technique, light other than laser light may be used, and a photosensitive resin other than the photosensitive polyimide may be used.

Subsequently, the interconnect M2 is formed using a dual damascene process.

Furthermore, similarly, a photosensitive organic insulating film is again applied to the wafer, and a pattern of the via hole V2 and a pattern of interconnect M3 corresponding thereto are formed by direct drawing, and then cured. The interconnect M3 is formed by a dual damascene process.

Subsequently, a final passivation film PLV2 is formed. For the passivation film PLV2, for example, a silicon nitride film formed by a plasma CVD method can be used.

In the photolithography process and the etching process, an opening is formed in the passivation film PLV2 at a predetermined region of the interconnect M3, and a bonding pad BP is formed in an interconnect deposition process.

For the lithography method for etching such through-holes, photolithography using a photoresist and a mask may also be used, or a direct drawing technique may also be used. When such a photolithography method is used, it is assumed that a frame is standardized on which chips are mounted in a post-process (assembly process). In other words, it is assumed that a pad position on a chip side where wire bonding is performed is standardized. However, there is a possibility that some pads may not be wire-bonded due to bonding options. Even in the case of direct drawing technique, it is possible to flexibly cope with such a situation and to open only necessary through-holes.

Since the semiconductor fabricating process described above can be realized using a combination of process techniques which are currently commonly adopted, detailed process conditions for each process will not be described. Those skilled in the art can set process conditions and execute each process.

### (Configuration of Design Platform)

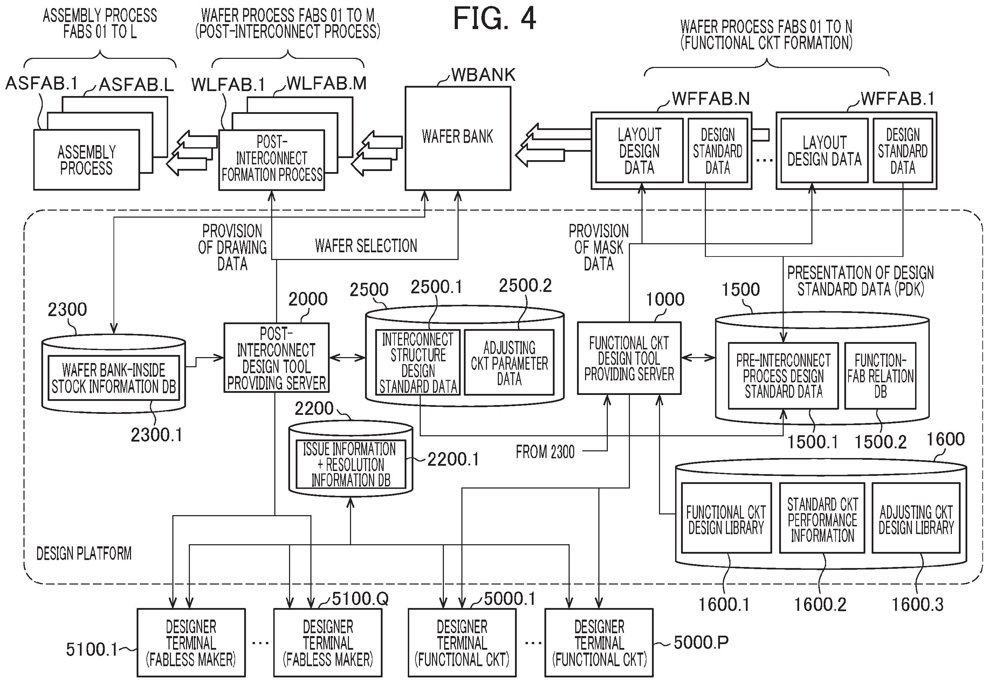

Fig. 4 is a conceptual diagram illustrating a configuration of a design platform of the design support system according to the present embodiment.

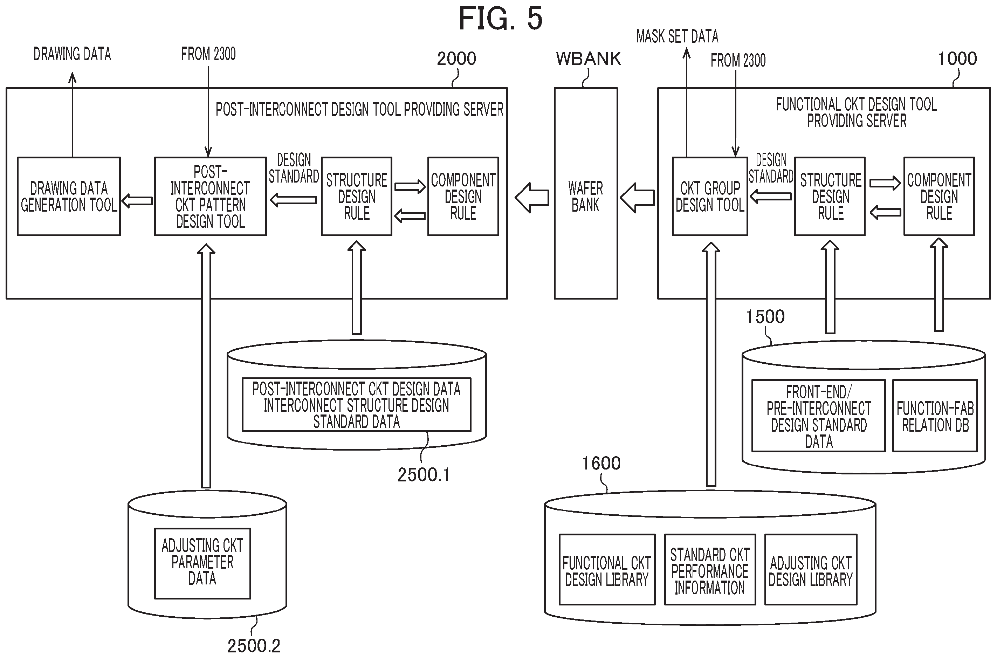

Fig. 5 is a conceptual diagram illustrating a server device extracted from the configuration shown in Fig. 4 to provide the design platform.

The server device shown in Figs. 4 and 5 may be an on-premises-based server or a cloud-based server. However, from viewpoints of sharing and using data among a plurality of designers, the cloud-based server is preferable. Here, the designers may belong to the same company or to different companies.

In addition, the designer who designs the functional circuit and the designer who designs the final semiconductor device (the design of the post-interconnect process) may belong to the same company or to different companies. Fig. 4 generally shows a case where the designers belong to different companies.

When the designer who designs the functional circuit and the designer who designs the final semiconductor device belong to different companies, the company that designs the functional circuit can also develop a business that provides the design information of the functional circuit to a company that fabricates and sells the final semiconductor device. Alternatively, the company employing the designer who designs the final semiconductor device can also develop a business that sells the semi-finished wafer stocked in a wafer bank WBANK to the company that fabricates and sells the final semiconductor device.

The design platform is configured as shown in Fig. 4, whereby these various business models can be achieved.

Referring to Figs. 4 and 5, the design platform is a design support system that provides a tool to supporting the circuit design of the semiconductor device fabricated in conjunction with functional circuit formation fabs WFFAB.1 to WFFAB.N and post-interconnect process fabs WLFAB.1 to WLFAB.M.

The functional circuit formation fabs WFFAB.1 to WFFAB.N are in charge of a pre-interconnect process in a first fabricating process under first design rules. The post-interconnect process fabs WLFAB.1 to WLFAB.M are in charge of a post-interconnect process in a second fabricating process under second design rules.

The functional circuit formation fabs WFFAB01 to WFFABN provide design standard data (PDK) to the design platform, and the memory device 1500 stores it as pre-interconnect process design standard data 1500.1.

A functional circuit design tool providing server 1000 supports design of circuit pattern in the pre-interconnect process for forming a plurality of circuit blocks on the semiconductor substrate. Here, the plurality of circuit blocks include a plurality of functional circuit blocks for implementing each of a plurality of individual functions, which constitute the overall function of the semiconductor device to be fabricated, on the semiconductor substrate. Furthermore, these plurality of functional circuit blocks include a plurality of stock circuit blocks for which design information of circuit patterns corresponding to the fabricating process for each of the functional circuit formation fabs WFFAB.1 to WFFAB.N is pre-prepared based on the first design rules described above. The design information of the stock circuit block is stored in a memory device 1600 as a functional circuit design library 1600.1, and performance information (specification information) of the stock circuit block is stored as standard circuit performance information 1600.2.

The functional circuit design tool providing server 1000 selects a predetermined number of stock circuit blocks from the plurality of stock circuit blocks to realize the overall function of the semiconductor device with respect to designer terminals 5000.1 to 5000.P (P: natural number), and supports a design for arranging them on the semiconductor substrate. Here, the "design support" means support of logic design and pattern design, and can be achieved, for example, by linking with existing EDA tools.

Furthermore, the plurality of circuit blocks are provided on the semiconductor substrate separately from the plurality of functional circuit blocks, and include a plurality of adjusting circuit blocks for tuning the performance achieved by the functional circuit blocks, respectively. Design information of the adjusting circuit is stored in an adjusting circuit design library 1600.3, and performance information of the adjusting circuit is stored as standard circuit performance information 1600.2.

After the pre-interconnect process is completed, the design information and the specification information of the functional circuit formed on the semi-finished wafer stocked in the wafer bank WBANK, and the design information and the specification information of the adjusting circuit formed on the semi-finished wafer are stored in the memory device 2300 as a wafer bank-inside stock information database (hereinafter, referred to as a "wafer bank-inside stock information DB") 2300.1. Although not being particularly limited, the configuration allows for the functional circuit design tool providing server 1000 to store information in the wafer bank-inside stock information DB 2300.1 and to update the information as will be described below.

When it is determined that the wafer formed with the functional circuit and the adjusting circuit capable of achieving the overall function is stocked in the wafer bank WBANK, the functional circuit design tool providing server 1000 provides a function to designer terminals 5000.1 to 5000.P that allows them to confirm through simulation that a desired overall function can be achieved by connecting the functional circuit and the adjusting circuit on the wafer with post-interconnect. When it is determined as a result of simulation that the overall function is achieved, the functional circuit design tool providing server 1000 selects these stocked semi-finished wafers as wafers to be sent to the post-interconnect process. Information indicating that such a selection is made is stored in the wafer bank-inside stock information DB 2300.1.

After a specific company selects to send the wafers stocked in the wafer bank WBANK to the post-interconnect process, access to the information about the wafers in the wafer bank-inside stock information DB 2300.1 is managed to be restricted only to the specific company.

On the other hand, when it is determined that the overall function is difficult to be achieved with the stocked semi-finished wafers, the functional circuit design tool providing server 1000 supports design for fabricating a new functional circuit and a new adjusting circuit to supplement insufficient functions, in addition to a predetermined number of selected stock circuit blocks and corresponding adjusting circuit blocks.

As described above, the designer terminals 5000.1 to 5000.P are assumed to be installed in a different company (a functional circuit design company) from the company (fabless maker) that performs the design of the post-interconnect process, for example. However, the designer terminals 5000.1 to 5000.P may be installed within the same company as the company that performs the design of the post-interconnect process.

Furthermore, the memory device 1500 stores a function-fab relation database (hereinafter, referred to as a "function-fab relation DB") 1500.2, which is used to select and specify the functional circuit formation fabs WFFAB.1 to WFFAB.N that are in charge of fabricating the semiconductor substrate on which a semiconductor device for achieving the overall function is formed, as described below. The function-fab relation DB 1500.2 stores a correspondence relation between an "individual function" necessary to achieve the overall function and the "design information in the functional circuit design library 1600.1 and the adjusting circuit design library 1600.3", based on PDK information. The "functional circuit design library 1600.1 and the adjusting circuit design library 1600.3" are provided in advance, corresponding to the processes of the functional circuit formation fabs WFFAB.1 to WFFAB.N.

The functional circuit design library 1600.1 and the adjusting circuit design library 1600.3 are collectively referred to as "IP core design information". The IP core design information includes, for each of the corresponding functional circuit formation fabs WFFAB.1 to WFFAB.N, types of functional circuits that can be fabricated, and design information and specifications of these functional circuits, as well as types of adjusting circuits that can be fabricated, and design information and specifications of these adjusting circuits. Such information can be provided as a PDK.

Furthermore, each of the plurality of functional circuit blocks includes at least one custom circuit block in which circuit pattern design information is designed by one of the designer terminals 5000.1 to 5000.P based on first design rules of the fab selected from the functional circuit formation fabs WFFAB.1 to WFFAB.N.

When it is determined that a plurality of stock circuit blocks are insufficient to achieve the overall performance, the functional circuit design tool providing server 1000 displays a message to the designer terminals 5000.1 to 5000.P, which perform the design corresponding to the pre-interconnect process, prompting to design the custom circuit block. Then, the functional circuit design tool providing server 1000, based on IP core design information, supports a logic design and a pattern design of the custom circuit block and the corresponding adjusting circuit block according to first design rules corresponding to the fab selected as the fab in charge of fabricating the semi-finished wafer that achieves the overall function. Here, when the fab is selected that is in charge of fabricating the semi-finished wafer that achieves the overall function based on the IP core design information, a configuration can be made in which the fab is selected that is capable of producing most functional circuits corresponding to the individual functions required to achieve the overall function. When the custom circuit block is designed, the functional circuit design tool providing server 1000 provides mask data for creating a reticle to the fab selected from the functional circuit formation fabs WFFAB.1 to WFFAB.N.

Depending on the selection of the company in charge of the design of the pre-interconnect process, design information regarding newly designed custom circuit block and corresponding adjusting circuit block can also be added to the "IP core design information". In this case, the newly designed custom circuit block will be added as one of the stock circuit blocks.

A post-interconnect design tool providing server 2000 supports designer terminals 5100.1 to 5000.Q (Q: natural number) in designing circuit patterns in the post-interconnect process to selectively connect the plurality of circuit blocks formed in the pre-interconnect process. Some of the plurality of circuit blocks formed in the pre-interconnect process may not be connected to any other circuit blocks by post-interconnect patterns and may not be used.

The post-interconnect design tool providing server 2000 selects one of post-interconnect process fabs WLFAB.1 to WLFAB.M according to a fabricating process used to fabricate the plurality of selected stock circuit blocks. Although such a selection is not particularly limited, for example, as will be described below, the selection may be made based on an overlap margin during exposure in the post-interconnect process, according to information regarding the pattern and dimensions of the contact portion between the uppermost-layer interconnect in the pre-interconnect process and the interconnect formed in the post-interconnect process. Then, the post-interconnect design tool providing server 2000 supports a logic design and a pattern design for the post-interconnect process using second design rules corresponding to the first design rules of the selected stock circuit block. Here, the "design support" also means support of the logic design and the pattern design, and can be achieved, for example, by linking with existing EDA tools.

Corresponding to the post-interconnect process, a memory device 2500 stores interconnect structure design standard data 2500.1 provided as a PDK from the post-interconnect process fabs WLFAB.1 to WLFAB.M, and adjusting circuit parameter data 2500.2 indicating a performance parameter of the adjusting circuit formed in the pre-process. The performance parameter of the adjusting circuit can be configured to include not only a design parameter but also information regarding the results of the circuit test performed in the pre-interconnect process.

The post-interconnect design tool providing server 2000 refers to a wafer bank-inside stock information DB 2300, and performs logic design and pattern design of the post-interconnect on the wafer sent into the post-interconnect process, based on the interconnect structure design standard data 2500.1 and the adjusting circuit parameter data 2500.2 (including test data of the functional circuit in the pre-interconnect process).

The post-interconnect design tool providing server 2000 provides drawing data for direct drawing to a fab selected from the post-interconnect process fabs WLFAB.1 to WLFAB.M.

When the post-interconnect process is completed, the post-process is carried out in one of an assembly process fabs ASFAB.1 to ASFAB.L which are in charge of an assembly process, and the semiconductor device is shipped as a final product.

From the design terminals 5000.1 to 5000.Q, depending on the selection of the designer or the company to which the designer belongs, it is possible to continuously store information regarding issues identified during trial production and methods used to resolve those issues through redesign or retrial production about the issues, in an issue information + resolution information database (hereinafter referred to as an "issue information + resolution information DB") 2200.1 of the memory device 2200. When the information is stored in the issue information + resolution information DB 2200.1, this information can be referred from the designer terminals 5000.1 to 5000.P, and can be used as a reference for the selection of the functional circuit and the design of the circuit pattern in the pre-interconnect process which are provided by the functional circuit design tool providing server 1000. In this way, it is possible to further shorten a work period of a trial production by referring to information about past failures.

The information stored in the issue information + resolution information DB 2200.1 may be configured to be accessible only from a designer terminal 5000.i of a company, which is permitted to access the information, through a separate contract with a company in charge of the design of the post-interconnect process.

Alternatively, the information stored in the issue information + resolution information DB 2200.1 may be widely available beyond individual companies. In any case, the extent of the information accessible from the company is determined by agreement between an operator and a user of the design platform.

Furthermore, in the functional circuit design tool providing server 1000, artificial intelligence can be trained using the information stored in the issue information + resolution information DB 2200.1 as training data, taking the issue information as input, and the resolution method as output. In this case, the functional circuit design tool providing server 1000 can also be configured to suggest a resolution method for the issue to the designer terminals 5000.1 to 5000.P as automatic response. Alternatively, contents to be trained as artificial intelligence is not limited to this configuration, and for example, when information regarding issues arising from a combination of specific functional circuits or a combination of specific functional circuits and specific adjusting circuits is accumulated, it is possible to configure the designer terminals 5000.1 to 5000.P to warn the designer of the possibility of a failure occurring while the designer in the process of performing the design.

### (Conceptual Diagram of Function-Fab relation data)

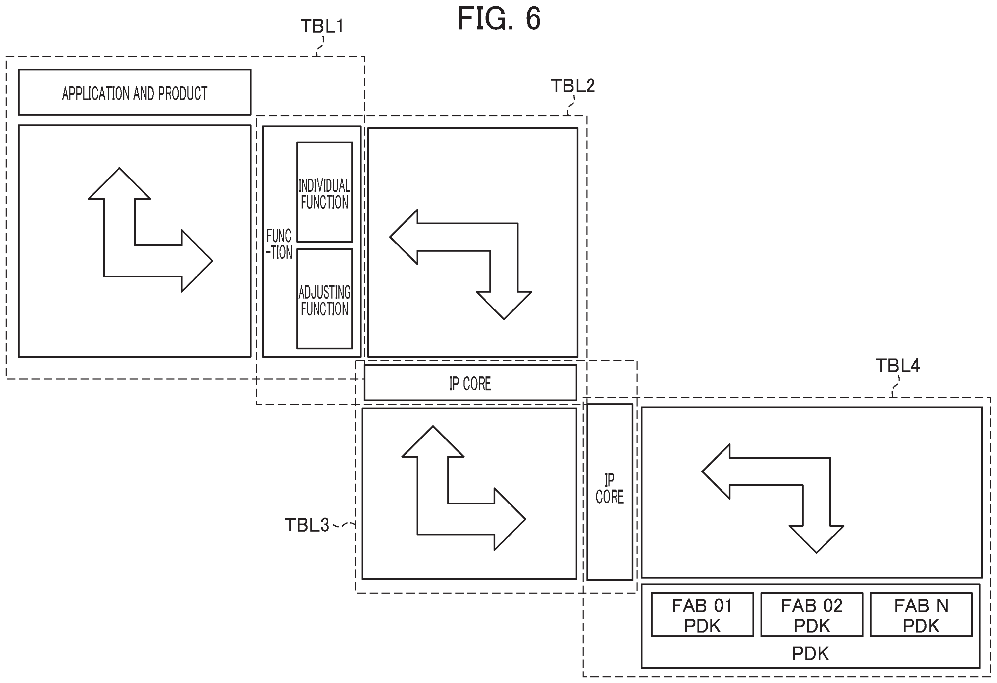

Fig. 6 is a conceptual diagram showing an overview of a configuration of the function-fab relation DB 1500.2.

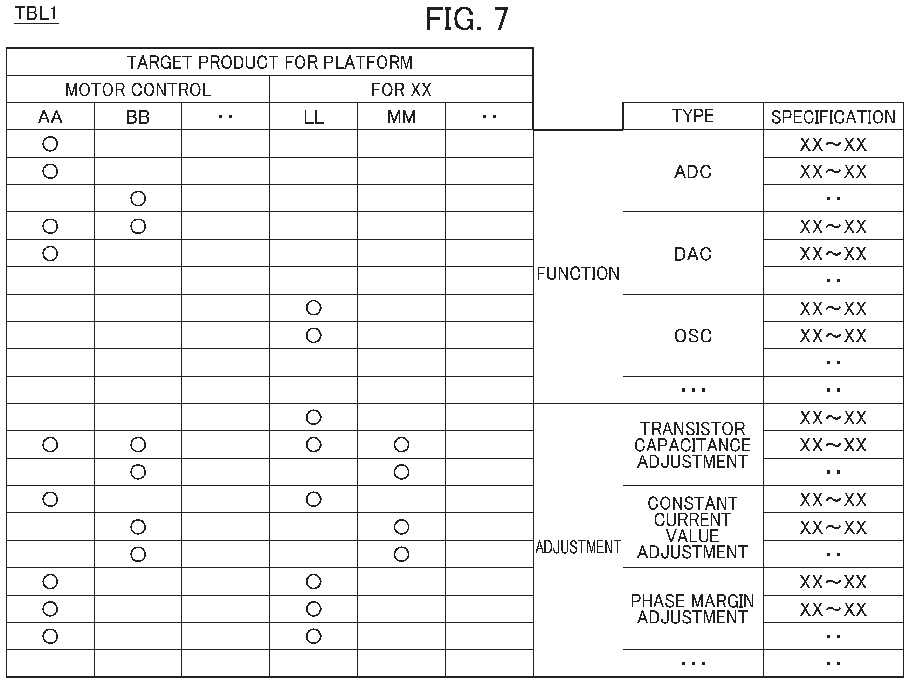

Figs. 7 to 10 are diagrams illustrating details of the configuration of the function-fab relation DB 1500.2.

Referring to Fig. 6, the function-fab relation DB 1500.2 stores the following correspondence relation.

In other words, the function-fab relation DB 1500.2 includes: a first correspondence relation TBL1 that indicates a correspondence relation between a functional circuit block corresponding to a plurality of individual functions that constitute the overall function for realizing an application or a product, and the corresponding adjusting circuit that is capable of tuning the performance of the functional circuit; and a second correspondence relation TBL2 between performance specifications for the individual functions of the functional circuit block and performance specifications of the adjusting circuit block, and a plurality of IP core design information groups for achieving these performance specifications, respectively.

Fig. 7 shows the details of the first correspondence relation TBL1.

For example, when the semiconductor device as a final product is, as a target, a semiconductor integrated circuit for motor control, it is assumed that individual functions (function AA, function BB, and the like) are required.

It is assumed that functional circuit (analog-digital converter circuit ADC, digital-analog converter circuit DAC, and the like) correspond to these individual functions (function AA, function BB, and the like), and that performance specifications are set for the functional circuits, respectively.

Similarly, adjusting functions (transistor capacitance adjustment, constant current source current value adjustment, phase margin adjustment, and the like) and functional circuits corresponding thereto are set to correspond to the individual functions (function AA, function BB, and the like), and their performance specifications are also set.

In Fig. 7, the presence of correspondence between the functional circuit and the adjusting circuit corresponding to each required individual function and each adjusting function is indicated by a circle (○).

The functional circuits corresponding to individual functions are not limited to those listed above, but include, for example, the following circuits.
· OSC (oscillation circuit)
· RTC (real time clock circuit)
· PLL (phase-locked loop circuit)
· VCO (voltage-controlled oscillator)
· OP-AMP (operational amplifier circuit)
· COMP (comparator)
· REF (reference voltage generation circuit, reference current generation circuit)
· POR (power-on reset circuit)
· REG (regulator circuit)
· CP (charge pump circuit)
· I/O (input/output circuit)
· MEM (small-scale memory circuit)

The functional circuits are not limited to these circuits.

In addition, the corresponding adjusting circuits also include the following circuits.
· passive circuit for parasitic element adjustment · input offset voltage adjusting circuit
· noise adjusting circuit
· thermal runaway adjusting circuit
· ESD tolerance adjusting circuit
· EMI tolerance adjusting circuit
· resistance and capacitance adjusting array circuit

The adjusting circuits are not limited to these circuits.

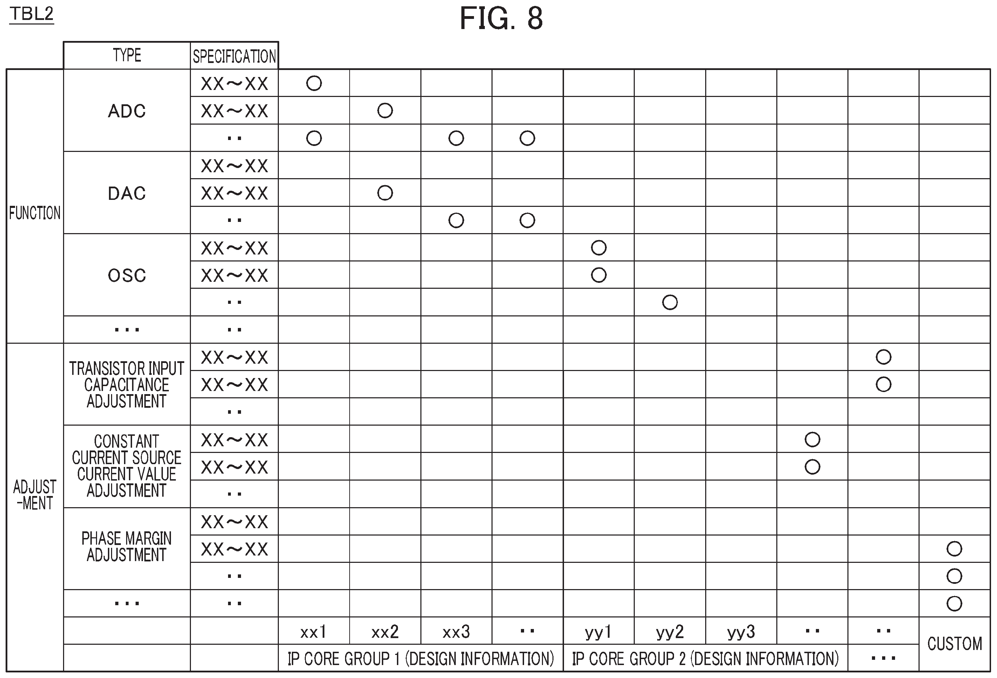

Fig. 8 shows a relation between IP core design information (IP core group 1, IP core group 2, ..., and custom core), which are prepared in advance and can be achieved corresponding to functional circuits and their specifications and adjusting circuits and their specification that can achieve each individual function. Here, the presence of correspondence relation is also indicated by a circle (○).

An IP core group i (i: natural number) contains design information for stock circuit blocks, while the custom core contains design information for custom circuit blocks.

Each of the IP core design information groups includes "design information about the stock circuit block" for defining a preset individual circuit pattern capable of achieving the performance specifications for at least one individual function.

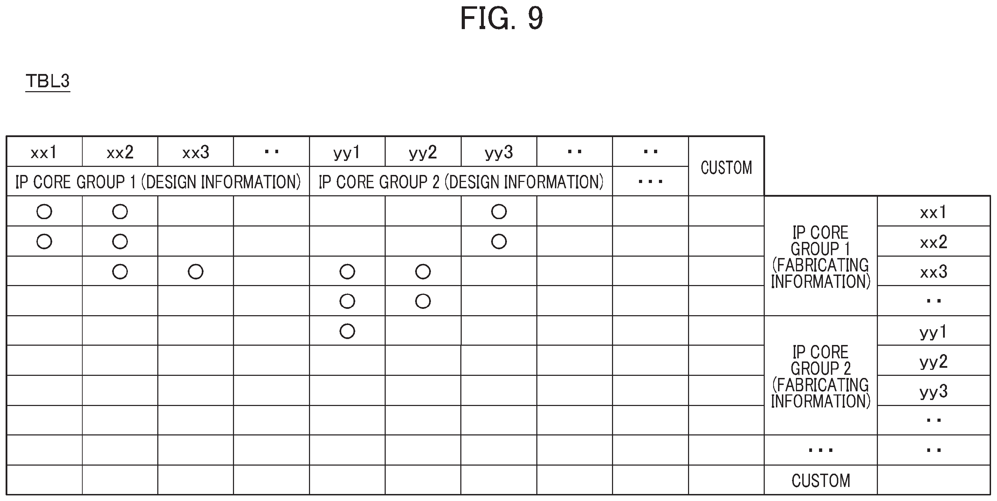

Returning to Fig. 6, the function-fab relation DB 1500.2 includes a correspondence relation TBL3 between the IP core design information (IP core group 1, IP core group 2, ..., and custom core) as circuit design information, and IP cores that can be fabricated in the functional circuit formation fabs WFFAB.1 to WFFAB.N, respectively. Fig. 9 shows such a correspondence relation TBL3.

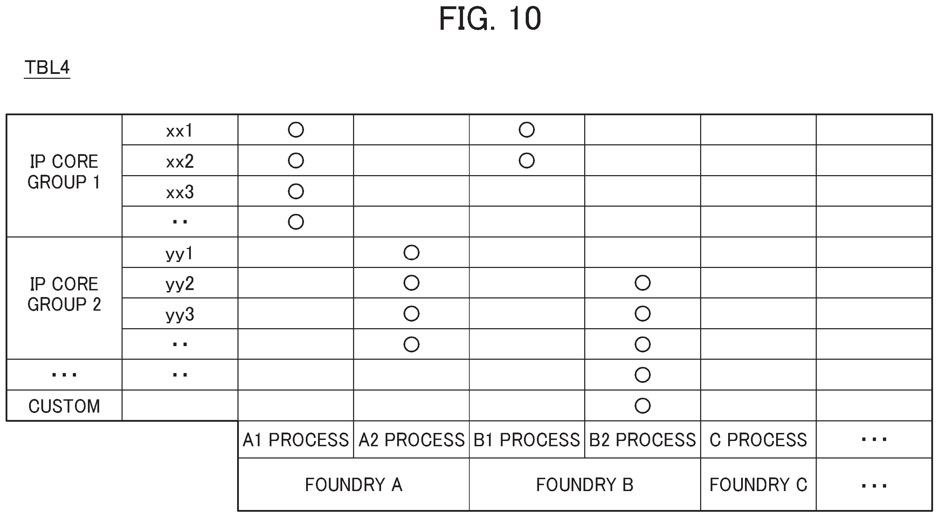

Furthermore, the function-fab relation DB 1500.2 includes a correspondence relation TBL4 between IP core design information that can be fabricated, a corresponding foundry, and a fabricating process (a fabricating process according to the first design rules). Fig. 10 shows such a correspondence relation TBL4.

The functional circuit design tool providing server 1000 selects an IP core design information group including a combination of functional circuit blocks capable of achieving the overall function, based on the function-fab relation DB 1500.2. Then, the functional circuit design tool providing server 1000 specifies a fab corresponding to the selected IP core design information group, out of the functional circuit formation fabs WFFAB.1 to WFFAB.N, and executes logic design and pattern design based on the first design rules corresponding to the specified fab.

### (Configuration and Operation of Servers constituting Design Platform)

A configuration and an operation of servers constituting the design platform will be described below with reference to the drawings.

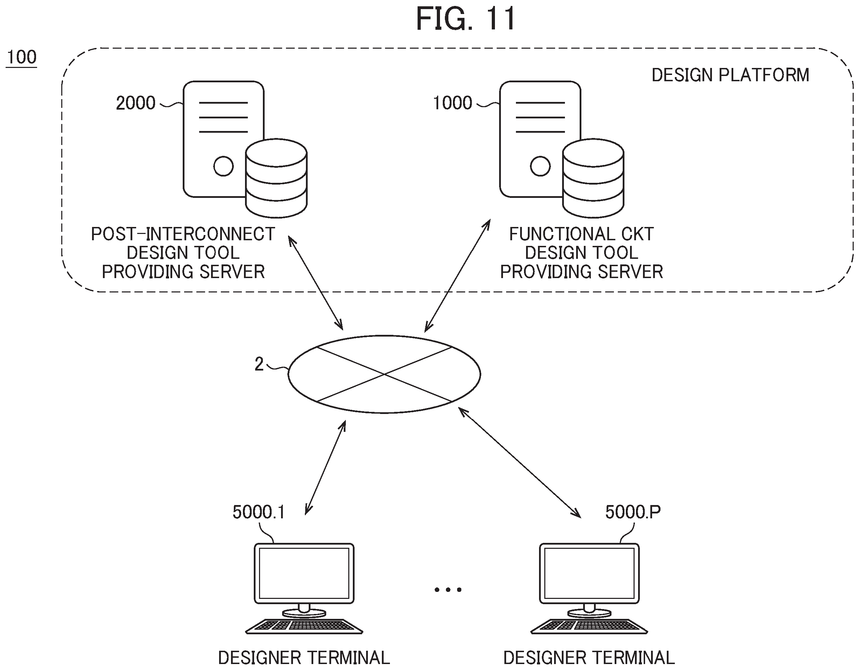

Fig. 11 is a diagram showing a configuration of the functional circuit design tool providing server 1000, the post-interconnect design tool providing server 2000, and the designer terminals 5000.1 to 5000.P.

Here, the designer terminals 5000.1 to 5000.P are assumed to correspond to the designer terminals 5000.1 to 5000.Q, respectively, and the designer terminals 5000.1 to 5000.Q are not shown. Hereinafter, the designer terminals 5000.1 to 5000.P will be collectively referred to as a designer terminal 5000.

For example, the functional circuit design tool providing server 1000 and the post-interconnect design tool providing server 2000 of the design platform are cloud-based servers, and are communicably connected to the designer terminals 5000.1 to 5000.P via a network 2.

### (Configuration and Operation of Functional Circuit Design Tool Providing Server 1000)

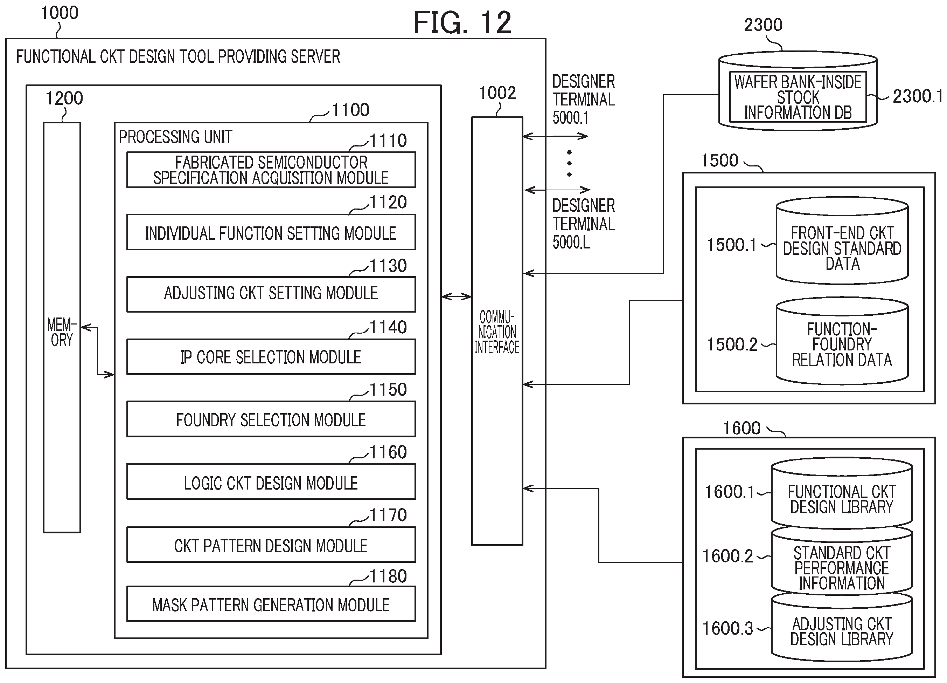

Fig. 12 is a functional block diagram showing the configuration of the functional circuit design tool providing server 1000.

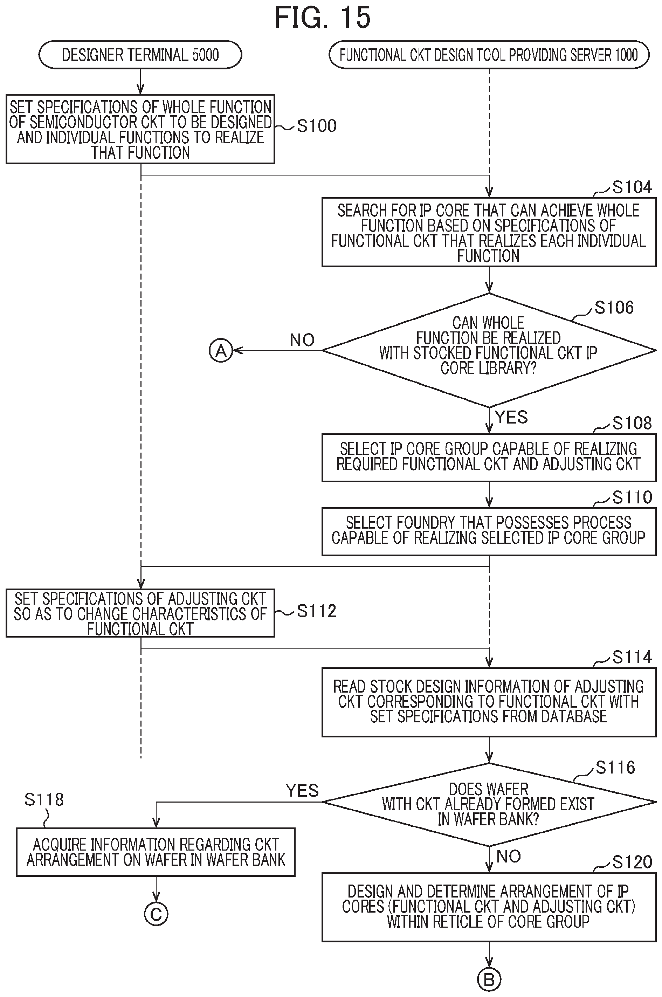

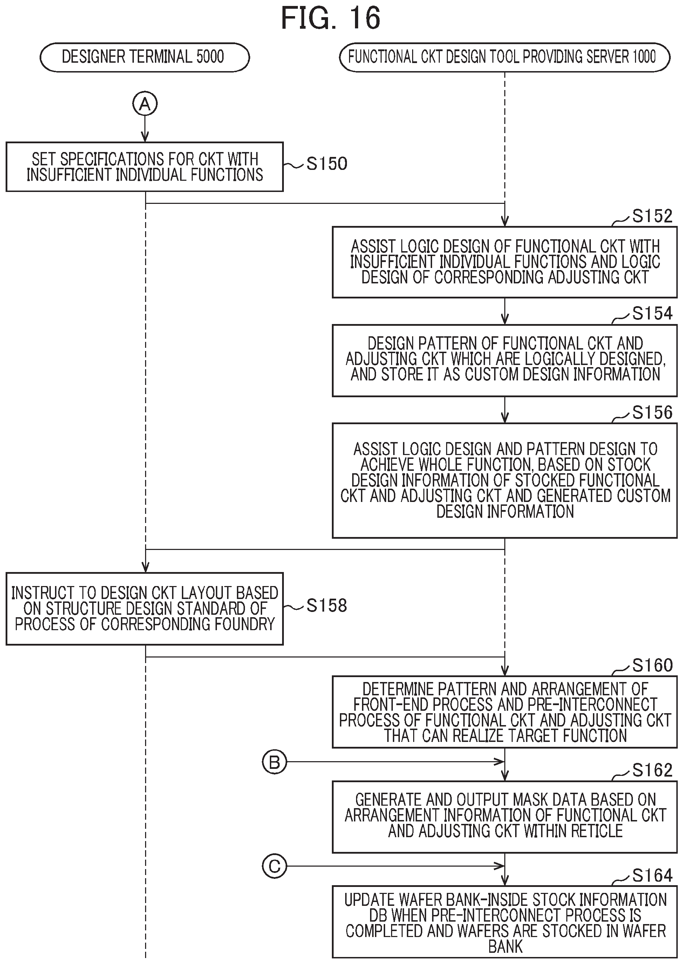

Figs. 15 and 16 are flowcharts illustrating the operation of the functional circuit design tool providing server 1000.

Referring to Fig. 12, the functional circuit design tool providing server 1000 includes a communication interface 1002 for communicating with the outside, an arithmetic processing unit 1100, and a memory 1200 that operates as a working memory region of the arithmetic processing unit 1100.

As described in Figs. 15 and 16, a fabricated semiconductor acquisition module 1110, an individual function setting module 1120, an adjusting circuit setting module 1130, an IP core selection module 1140, a foundry selection module 1150, a logic circuit design module 1160, a circuit pattern design module 1170, and a mask pattern generation module 1180 correspond to functions in which a CPU (Central Processing Unit), which corresponds to the arithmetic processing unit 1100, executes the corresponding modules in the program stored in the memory when the computer operates as a functional circuit design tool providing server 1000.

Referring to Figs. 12, 15, and 16, when the designer sets specifications of the overall function of the semiconductor circuit to be designed and the individual functions to realize it using the designer terminal 5000 (S100), the fabricated semiconductor acquisition module 1110 and the individual function setting module 1120 of the functional circuit design tool providing server 1000 acquire information regarding the overall function and the individual functions, and the IP core selection module 1140 searches for IP core design information that can achieve the overall function based on the specifications of the functional circuit that realizes each of the individual functions (S104).

When it is determined that the overall function can be realized with the stocked functional circuit IP core library (Y in S106), the IP core selection module 1140 selects an IP core group capable of realizing the required functional circuit and adjusting circuit (step 108). On the other hand, when it is determined that the overall function cannot be realized (N in S106), the IP core selection module 1140 allows the process to proceed to step 150 in Fig. 16.

Returning to step 108, subsequently, the foundry selection module 1150 selects a foundry that possesses a process capable of realizing the selected IP core group (step S110).

Depending on the selection of the foundry, the designer uses the designer terminal 5000 to set the specifications of the adjusting circuit so as to change the characteristics of the functional circuit (S112).

The foundry selection module 1150 reads stock design information of the adjusting circuit corresponding to the functional circuit with the set specifications from a database in the memory device 1600 (step S114), and refers to the wafer bank-inside stock information DB 2300.1 to determine whether a wafer with circuits already formed exists in the wafer bank (S116).

When the foundry selection module 1150 determines that the wafer already formed exists (Y in S116), the logic circuit design module 1160 and the circuit pattern design module 1170 acquire information regarding a circuit arrangement on the wafer in the wafer bank (S118), the process moves to step S164 in Fig. 16, and the wafer bank-inside stock information DB 2300.1 is updated to specify the wafer to be sent to the post-interconnect process.

On the other hand, when the foundry selection module 1150 determines that the wafer already formed does not exist (N in S116), the logic circuit design module 1160 and the circuit pattern design module 1170 design and determine the arrangement of IP cores (functional circuit and adjusting circuit) within the IP core group in the reticle (S120).

Referring to Fig. 16, when it is determined in step S106 that the IP core selection module 1140 cannot realize the overall function (N in S106), the fact is notified to the designer terminal 5000, and the designer sets the specifications for circuits with the insufficient individual functions using the designer terminal 5000 (S150).

The logic circuit design module 1160 supports the logic design of the functional circuit with insufficient individual functions and the logic design of the corresponding adjusting circuit (S152).

Subsequently, the circuit pattern design module 1170 designs patterns of the functional circuit and the adjusting circuit which are logically designed, stores the patterns in the memory device 1600 as custom design information, and updates a function-foundry relation DB (S154).

Furthermore, the logic circuit design module 1160 and the circuit pattern design module 1170 support the logic design and, if necessary, the pattern design to achieve the overall function, based on the stock design information of the stocked functional circuit and adjusting circuit and the generated custom design information, and simulate achievability of the overall function (S156).

When the designer instructs the designer terminal 5000 to design the circuit layout based on a structure design standard of the process of the corresponding foundry (S158), the circuit pattern design module 1170 determines the patterns and arrangement of the front-end process and the pre-interconnect process of the functional circuit and the adjusting circuit that can realize the target function (S160), and the mask pattern generation module 1180 generates and outputs mask data based on the arrangement information of the functional circuit and the adjusting circuit within the reticle (S162).

The logic circuit design module 1160 and the circuit pattern design module 1170 update the wafer bank-inside stock information DB when the pre-interconnect process is completed and the wafers are stocked in the wafer bank (S164).

### (Configuration and Operation of Post-interconnect Design Tool Providing Server 2000)

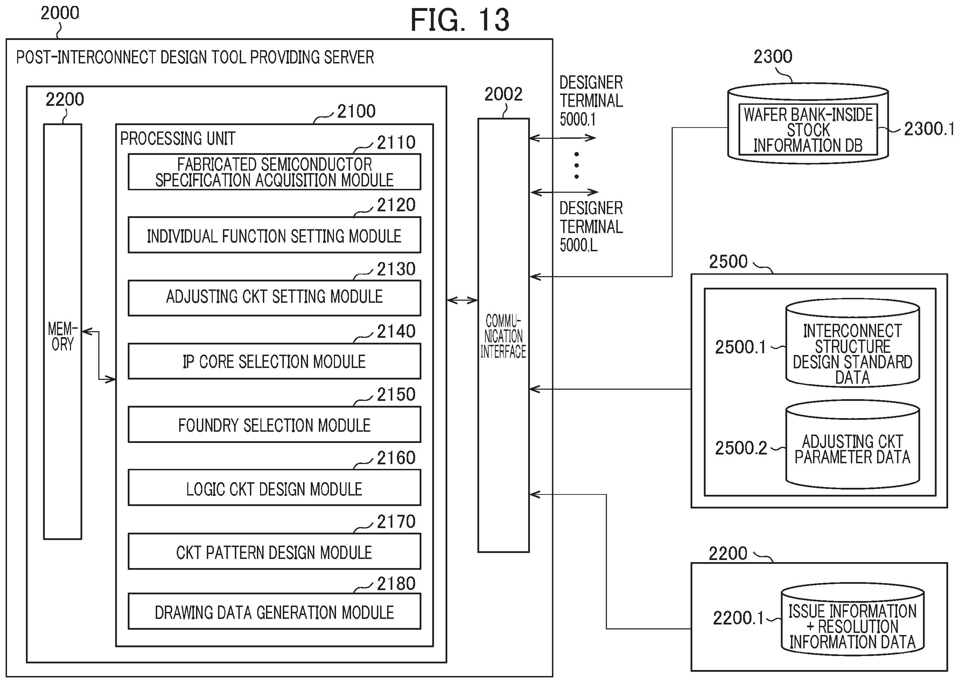

Fig. 13 is a functional block diagram showing the configuration of the post-interconnect design tool providing server 2000.

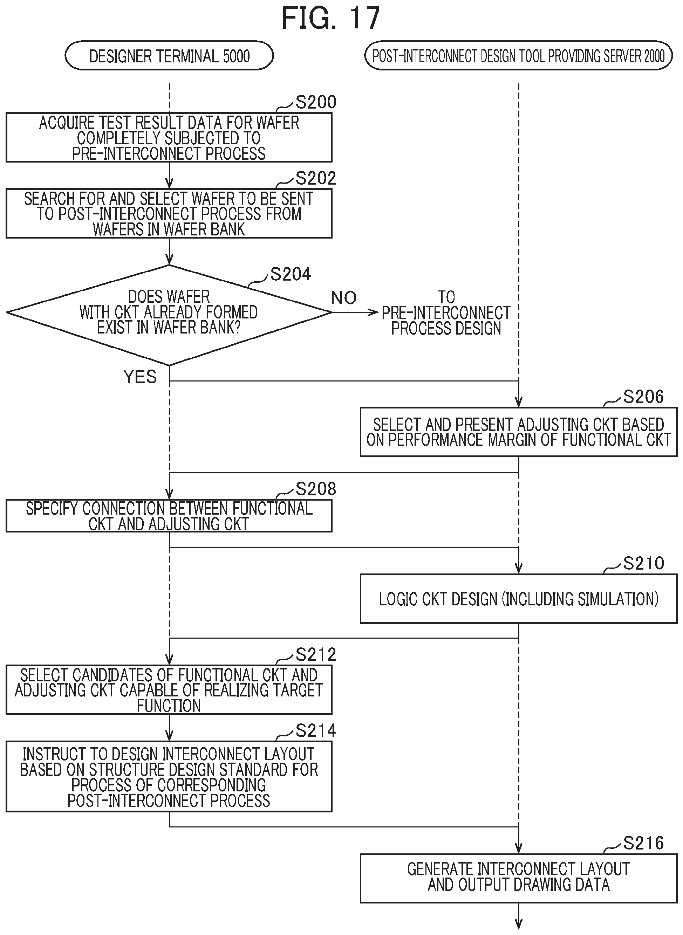

Fig. 17 is a flowchart illustrating the operation of the post-interconnect design tool providing server 2000.

Referring to Fig. 13, the post-interconnect design tool providing server 2000 includes a communication interface 2002 for communicating with the outside, an arithmetic processing unit 2100, and a memory 2200 that operates as a working memory region for the arithmetic processing unit 2100.

As described in Fig. 17, a fabricated semiconductor acquisition module 2110, an individual function setting module 2120, an adjusting circuit setting module 2130, an IP core selection module 2140, a foundry selection module 2150, a logic circuit design module 2160, a circuit pattern design module 2170, and a drawing data generation module 2180 correspond to functions in which a CPU, which corresponds to the arithmetic processing unit 2100, executes the corresponding modules in the program stored in the memory when the computer operates as the post-interconnect design tool providing server 2000.

Referring to Figs. 13 and 17, when the overall function of the semiconductor device to be fabricated is set in the designer terminal 5000, similarly to Fig. 12, the fabricated semiconductor acquisition module 2110, the individual function setting module 2120, the adjusting circuit setting module 2130, the IP core selection module 2140, and the foundry selection module 2150 specify the target foundry from the individual function and the adjusting function, acquire test result data of wafers completely subjected to the pre-interconnect process (S200), and search for and select a wafer to be sent to the post-interconnect process, from the wafers in the wafer bank (S202). When a company that designs the pre-interconnect process also designs the post-interconnect process, the wafer to be sent to the post-interconnect process from the wafers in the wafer bank may be specified based on the information obtained from the design of the pre-interconnect process.

When the designer terminal 5000 refers to the wafer bank-inside stock information DB and it is presented that a wafer with a circuit already formed exists in the wafer bank (Y in S204), the post-interconnect design tool providing server 2000 selects an adjusting circuit from the performance margin of the functional circuit and presents it to the designer terminal 5000 (S206). Then, when the designer terminal 5000 specifies the connection between the functional circuit and the adjusting circuit (S208), the logic circuit design module 2160 executes a logic circuit design (including simulation) in the post-interconnect process. The logic circuit design module 2160 presents the designer terminal 5000 with candidates of the functional circuit and the adjusting circuit capable of realizing the target function, according to the results of the logic circuit design (S210). When the designer terminal 5000 selects the candidate of the functional circuit and the adjusting circuit capable of realizing the target function (S212), the designer terminal 5000 instructs the design of the interconnect layout based on the structure design standard rules of the process of the corresponding post-interconnect process (S214). The circuit pattern design module 2170 generates an interconnect layout according to the instruction, and the drawing data generation module 2180 generates and outputs drawing data (S216).

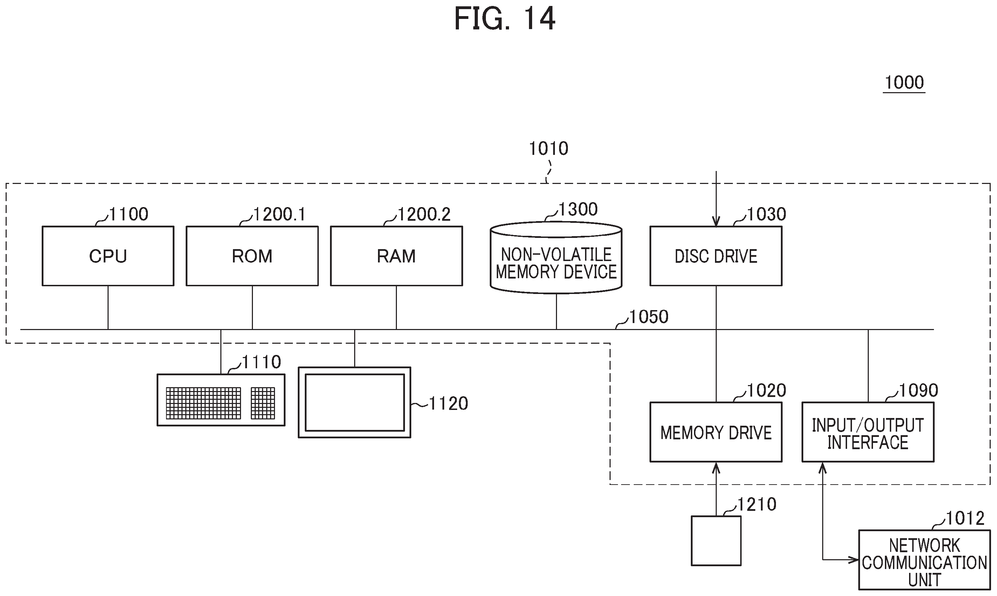

Fig. 14 is a block diagram illustrating a hardware configuration of the functional circuit design tool providing server 1000 shown in Fig. 12.

In the following description, the functional circuit design tool providing server 1000 is assumed to operate on a server operating on a cloud. However, the functional circuit design tool providing server 1000 may also operate on an on-premises-based server, for example.

The configuration of the functional circuit design tool providing server 1000 will be described below as an example, but hardware configurations of the post-interconnect design tool providing server 2000 and the designer terminal 5000 are basically the same.

Referring to Fig. 14, the server 1000 may be configured such that the arithmetic processing is performed by the processor (CPU: Central Processing Unit) within its own housing, or some of program processing may be executed on another server. It is assumed in the following description that the arithmetic processing is executed by the processor within its own housing.

Referring to Fig. 14, the server 1000 includes a computer device 1010, a network communication unit 1012 for communicating with a network, and a recording medium (for example: a memory card) 1210 that records external data and provides it to the computer device 1010.

For example, an example of the recording medium 1210 may include a USB memory, a memory card, or an external memory device. The network communication unit 1012 can utilize, for example, a wired LAN communication function or a wireless LAN communication function. The network communication unit 1012 and an input/output interface 1090 constitute the communication interface 1002.

As shown in Fig. 14, a computer body constituting the computer device 1010 includes, in addition to a disk drive 1030 and a memory drive 1020, a CPU 1100, a memory 1200 including a ROM (Read Only Memory) 1200.1 and a RAM (Random Access Memory) 1200.2, a non-volatile memory device 1300 that is rewritable in a non-volatile manner, and an input/output interface 1090 that is used for communication via a network and data exchange with the outside, each being connected to a bus 1050. As the non-volatile memory device 1300, for example, an HDD (Hard Disc Drive) or an SSD (Solid State Drive) is used. In the following description, an SSD is assumed to be used. An optical disk can be mounted on the disk drive 1030. A memory card 1210 can be mounted on the memory drive 1020.

In the operation of the program in the computer device 1010, it is assumed that data and program storing fundamental information for the operation of a computer are stored in the SSD 1300.

In Fig. 14, an example of a medium on which information such as a program to be installed on the computer body can be recorded may be, for example, a DVD-ROM (Digital Versatile Disc), a memory card, or a USB memory. To accommodate such a case, the computer body is provided with the drive device (the memory drive 1020, or the disk drive 1030) capable of reading such a medium.

Main components of the computer device 1010 are configured by computer hardware and software executed by the CPU 1100. Generally, such software is distributed in a state of being stored in a storage medium, or distributed through a network, acquired through the disk drive 1030 or the network communication unit 1012, and temporarily stored in the SSD 1300. Then, the software is read from the SSD 1300 into the RAM 1200.2 in memory and executed by the CPU 1100. In a case of network connection, the software may be loaded directly into the RAM and executed without being stored in the SSD 1300.

The program for functioning as the computer device 1010 does not necessarily need to include, in its distribution, an operating system (OS) that causes the computer body 1010 to execute a function of an information processing device or the like in the program. The program only needs to contain a portion of command that calls an appropriate function (module) in a controlled manner to obtain a desired result. How the computer system 1010 operates is well known, and thus will not be described in detail.

Furthermore, the CPU 1100 may be a single-core processor, or a multi-core processor. In other words, either the single-core processor or the multi-core processor may be used. In addition, the server 1000 may be configured with a plurality of servers to execute distributed processing.

### (Configuration of Die after Pre-interconnect process and Die after Post-interconnect process)

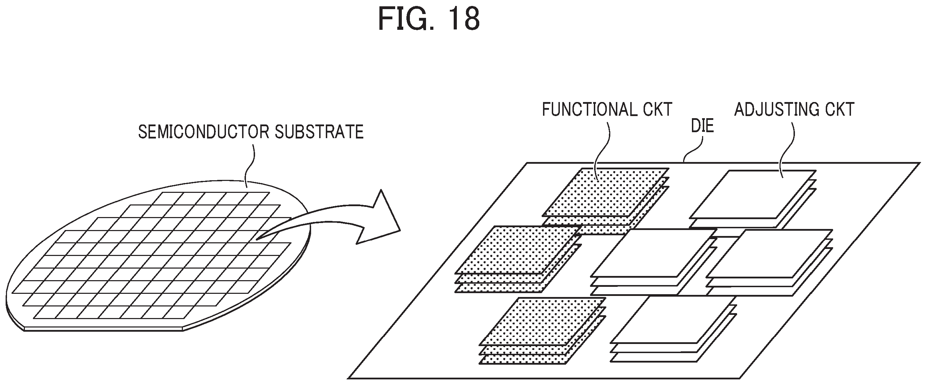

Fig. 18 is a view illustrating a plurality of dies formed on a semiconductor substrate after the pre-interconnect process.

In Fig. 18, a plurality of functional circuits and a plurality of adjusting circuits are formed on a single die.

In Fig. 18, the reason that the functional circuit and the adjusting circuit are represented by a plurality of layers is to show that a plurality of interconnect layers and insulating film layers are formed sequentially in fabricating the circuits, as described in Fig. 2.

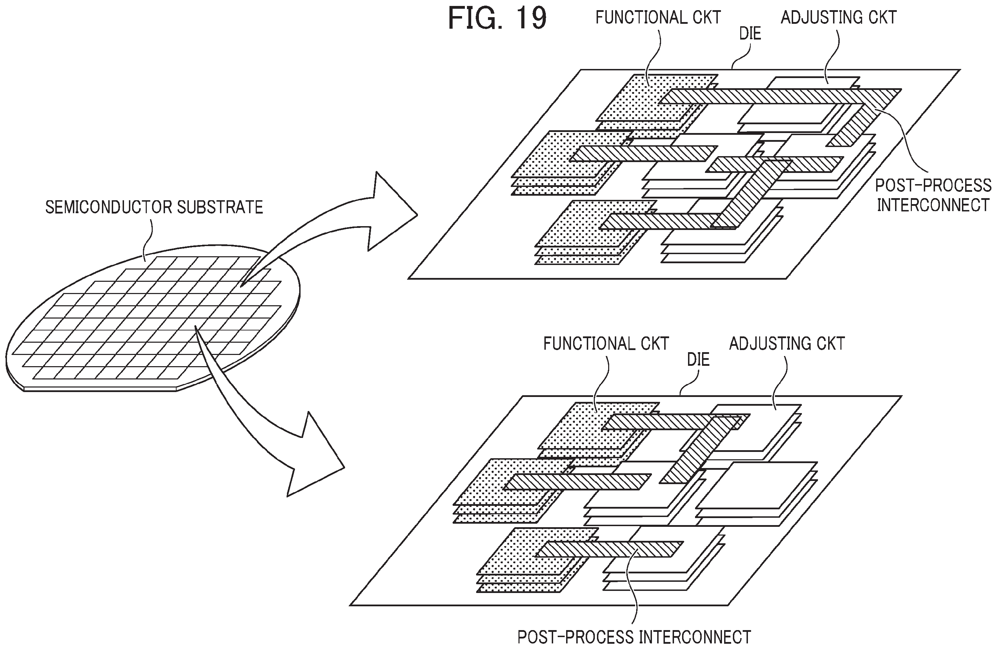

Fig. 19 is a view illustrating a plurality of dies formed on a semiconductor substrate after the post-interconnect process.

In Fig. 19, two different die configurations are shown as examples.

As described above, the functional circuit design tool providing server 1000 generates a pattern for an optical mask for performing an exposure process on a semiconductor substrate using a step-and-repeat projection exposure method for each die on which a semiconductor device is formed in the pattern transfer process at the first semiconductor fabricating site (for example, the functional circuit formation fab). Here, as described above, at least one interconnect layer on the upper layer side of the pre-interconnect process may be formed by a direct drawing technique. In other words, the pattern for the optical mask is generated for at least a portion of the pattern transfer process at the first semiconductor fabricating site. In the remaining steps of the pattern transfer process at the first semiconductor fabricating site, drawing data may be generated for implementing a direct drawing method. On the other hand, the post-interconnect design tool providing server 2000 generates drawing data for forming interconnect patterns that connect circuit blocks to the semiconductor substrate during the pattern transfer process at the second semiconductor fabricating site (for example, the post-interconnect process fab).

By using direct drawing, as shown in Fig. 19, different interconnect patterns are formed in the post-interconnect process for a die in which the functional circuit block and the adjusting circuit block have the same pattern, out of the plurality of dies.

More specifically, the different interconnect patterns are interconnect patterns that connect a common functional circuit block to a different adjusting circuit block, in a first die and a second die, which are contained within a die in which the functional circuit block and the adjusting circuit block have the same common pattern.

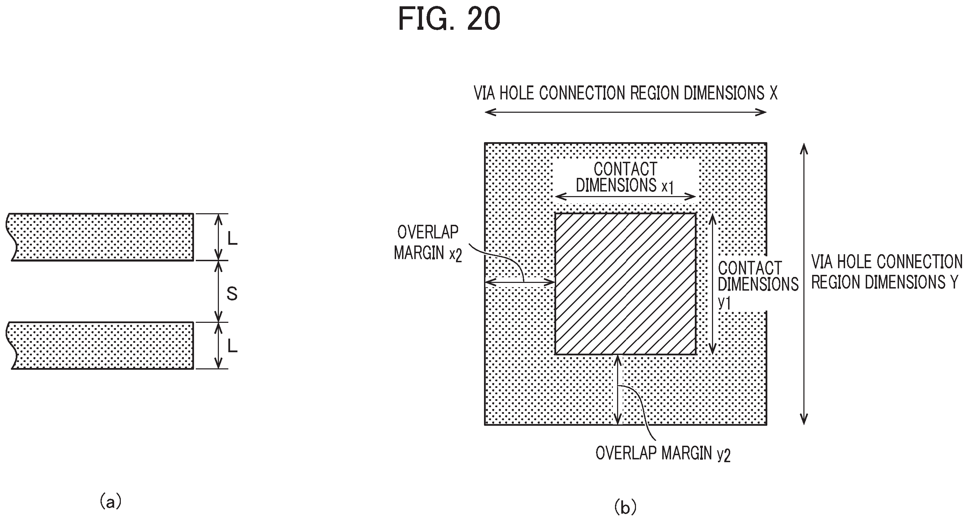

Fig. 20 is a view showing design rules for uppermost-layer interconnect in an interconnect group during the pre-interconnect process, and design rules for a contact portion between uppermost-layer interconnect M1 and interconnect M2 formed during the post-interconnect process.

As shown in Fig. 20(a), the design rules for the uppermost-layer interconnect define an interconnect interval S(nm) and an interconnect width is L(nm).

On the other hand, as shown in Fig. 20(b), in the design rules for the contact portion between the uppermost-layer interconnect of the pre-interconnect process and the interconnect formed in the post-interconnect process, first design rules for the stock circuit block includes an overlap margin for the connection portion at the via hole for connecting the interconnect formed in the pre-interconnect process and the interconnect formed in the post-interconnect process based on the second design rules.

More specifically, although not being particularly limited, it is desirable that a relation is one of the following i) or ii) in the configuration shown in Fig. 20. [Formula 1] $\begin{matrix}\left.i\right) \left\{\begin{matrix}X \geq {x}_{1} + 2 {x}_{2} \\ Y \geq {y}_{1} + 2 {y}_{2}\end{matrix}\right. \\ S e t t i n g : \left\{\begin{matrix}{x}_{1} , {y}_{1} \geq ○ μ m \left(F o r e x a m p l e ,1.5 μ m\right) \\ {x}_{2} , {y}_{2} \geq △ μ m \left(F o r e x a m p l e ,0.25 μ m\right)\end{matrix}\right. \\ \left.i i\right) \begin{matrix}X , Y \geq λ ∗ D {R}_{\text{min}} & \left[D {R}_{\text{min}} : P o s t - i n t e r c o n n e c t d e s i g n r u l e \left(d e s i g n r u l e\right)\right]\end{matrix} \\ S e t t i n g : \left\{\begin{matrix}\begin{matrix}λ = M I N \left(\frac{D {R}_{B E}}{D {R}_{F E}}\right) & \left\{\begin{matrix}2.0 μ m \leq D {R}_{B E} \leq 3.0 μ m \\ 0.1 μ m \leq D {R}_{F E} \leq 0.8 μ m\end{matrix}\right.\end{matrix} \\ \begin{matrix}D {R}_{\text{min}} = D {R}_{F E} & ; & L , S \geq D {R}_{F E}\end{matrix}\end{matrix}\right.\end{matrix}$

Here, DR_{BE} and DR_{FE} represent minimum design dimensions of the interconnect widths in the pre-interconnect process and the post-interconnect process, respectively. As the design standard, the pre-interconnect process has a smaller minimum design dimension and higher alignment accuracy between masks (between processes) than the post-interconnect process.

Therefore, although not being particularly limited, for example, a planar structure of the uppermost-layer interconnect formed in the pre-interconnect process has a rectangular section for forming via hole contacts, and it is desirable that one side of the rectangular section be at least 2.5 times the minimum width of the design standard for the uppermost-layer interconnect. Here, "2.5 times" refers to a typical value used in the formula exemplified in ii), DR_{BE} = 2.0 µm, and DR_{FE} = 0.8 µm, being not limited to these values.

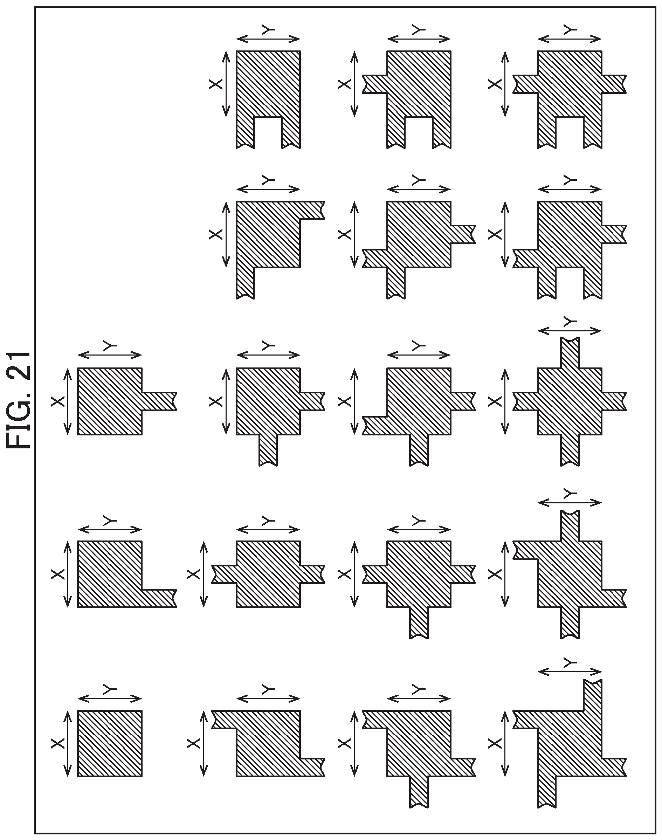

Fig. 21 is a conceptual diagram showing various examples of changes in pattern of contact portions between the uppermost-layer interconnect in the pre-interconnect process and the interconnect formed in the post-interconnect process.

As shown in Fig. 21, a shape of a contact formation region formed in the uppermost-layer interconnect during the pre-interconnect process can vary in order to connect with first layer interconnect in the post-interconnect process.

Therefore, according to the design support system and the design support method of the first embodiment, it is possible to shorten the product development period in diversified small-quantity production.

In addition, as a design platform, designers of a plurality of companies use the design support system to share the information necessary for design, whereby it is possible to more shorten the time required for design and trial production.

Furthermore, such a design platform enables transactions where companies supplying semi-finished wafers sell the semi-finished wafers to fabless companies that are in charge of the post-interconnect process. As a result, the design platform does not necessarily need to manage the semi-finished wafers as inventory, and the participation of companies that supply various semi-finished wafers makes it possible to further shorten the work period and reduce costs up to trial production and mass production of a predetermined semiconductor device.

### [Second Embodiment]

The configuration has been described in the first embodiment described above in which, for the "functional circuit" formed in the pre-interconnect process, the "performance" realized by the functional circuit block is tuned using the "adjusting circuit", based on the post-interconnect pattern in the post-interconnect process.

A configuration will be described in a second embodiment in which not only the "performance" is tuned but also the "function" and the "characteristics" of the functional circuit can also be changed by the post-interconnect pattern.

As just one example, in a case of a so-called "operational amplifier" circuit, there is an analog circuit that can change a function and characteristics of the circuit itself, such as an "amplification amplifier", an "attenuation amplifier", a "buffer amplifier", a "comparator", a "differentiator", an "integrator", and a "detection/absolute-value circuit", by changing characteristic values (for example: resistance values and capacitance values) of passive circuits (for example: resistors and capacitors) connected to the outside and a form of connection to their input/output nodes. More specifically, assuming the existence of a basic circuit called an "operational amplifier", it is possible to realize functions and characteristics, for example, "amplification", "filtering", "signal conversion (for example: converting a current change to a voltage change)", "signal processing (for example: signal synthesis, differentiation, integration)", and "oscillation", depending on characteristic values of the passive circuits connected to the input/output nodes and a form of its connection.

In contrast, the "performance" to be tuned in the first embodiment refers to the degree of function achieved with the same characteristics and functions, and the "adjusting circuit" is used to tune such performance to bring it closer to the design value. For example, the "amplification" means fine-tuning of the "amplification ratio".

In contrast, a configuration will be described in the second embodiment in which the "functions realized by the functional circuit" and the "characteristics of the functional circuit" can be changed by the post-interconnect pattern in the post-interconnect process. With such a configuration, the "semi-finished wafers" formed in the pre-interconnect process and temporarily stocked as inventory in the "wafer bank" is used, whereby the degree of design freedom is increased when specifications are changed by the post-interconnect pattern in the post-interconnect process.

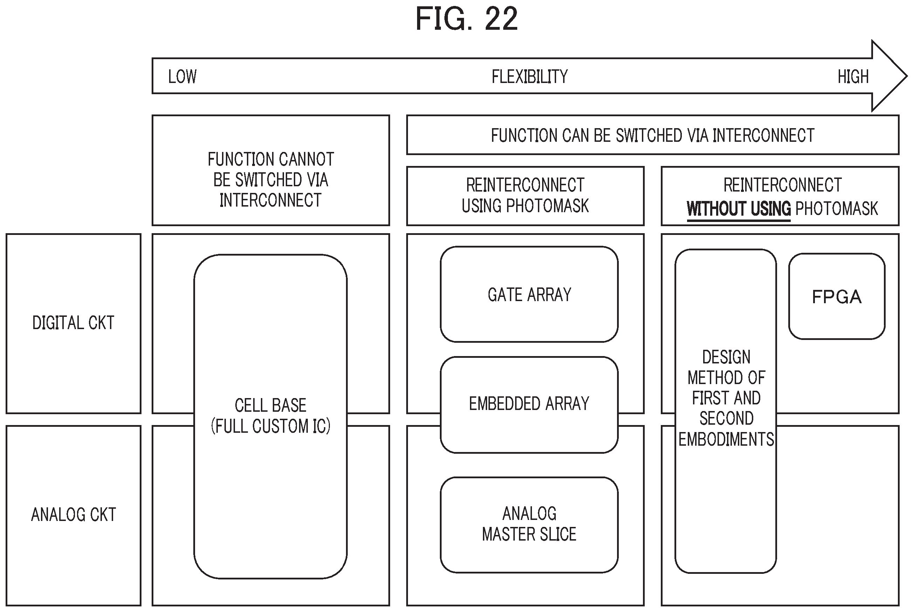

Fig. 22 is a conceptual diagram showing a comparison of flexibility of design method in a digital circuit and an analog circuit.

A horizontal axis in Fig. 22 represents flexibility, where the "flexibility" refers to the degree to which the function of the circuit can be switched by changing the interconnect pattern after secondary design trial-production, depending on results of trial production after primary design trial-production.

For both the digital circuit and the analog circuit, a full custom IC designed using a cell-based method is essentially necessary to be redesigned from the beginning when the design change occurs depending on the result of trial production after the primary design.

On the other hand, examples of design methods of enabling switching of circuit functions through reinterconnect using photomasks include a "gate array method", an "embedded array method", and an "analog master slice method".

The gate array method for digital circuits refers to a semi-custom LSI fabricated in such a manner that interconnect is applied to a base with logic cells (for example: 2-input NAND gates), which are created in advance, according to the design. The circuit functions can be switched or changed by re-interconnect using a photomask without changing the logic cell portions.

On the other hand, the analog master slice method is a method in which wafers formed with components such as transistors, resistors, and capacitors are prepared in advance, and a user's own analog semi-custom IC/LSI is realized by changing a photomask for forming an interconnect layer in order to realize the function that is suitable for the user's application.

Furthermore, in digital circuits and mixed signal circuits of digital circuits and analog circuits, the "embedded array method" is sometimes employed. The "embedded array method" is a design and fabricating method of combining the features of gate arrays and cell-based ICs. Once a cell-based IP to be used by the user is decided, a silicon wafer is precedingly fed into a fabricating line. On the other hand, a gate array for the user logic circuit is fabricated in advance. When the user logic design is completed, arrangement and interconnect of the user logic portion are performed using a process that only handles interconnect layers.

Furthermore, as a method with the highest flexibility, there is an "FPGA (Field Programmable Gate Array) method" or "design method of the first or second embodiment", which allows for reinterconnect without using a photomask.

The "FPGA" method is literally a design method for digital circuits that integrate logic circuits, allowing designers to program the configuration of the logic circuits in the field. An internal circuit configuration, and therefore the processing content of the device, can be rewritten through programming.

In contrast, the "design method of the first or second embodiment" is also applicable to both digital circuits and analog circuits, and mixed signal circuits of digital circuit and analog circuit.

As a result, according to the "design method of the first embodiment" described above, or the "design method of the second embodiment" to be described below, it is possible to develop semiconductor integrated circuit chips with high flexibility and reduced development costs, for example, in analog/digital mixed ICs.

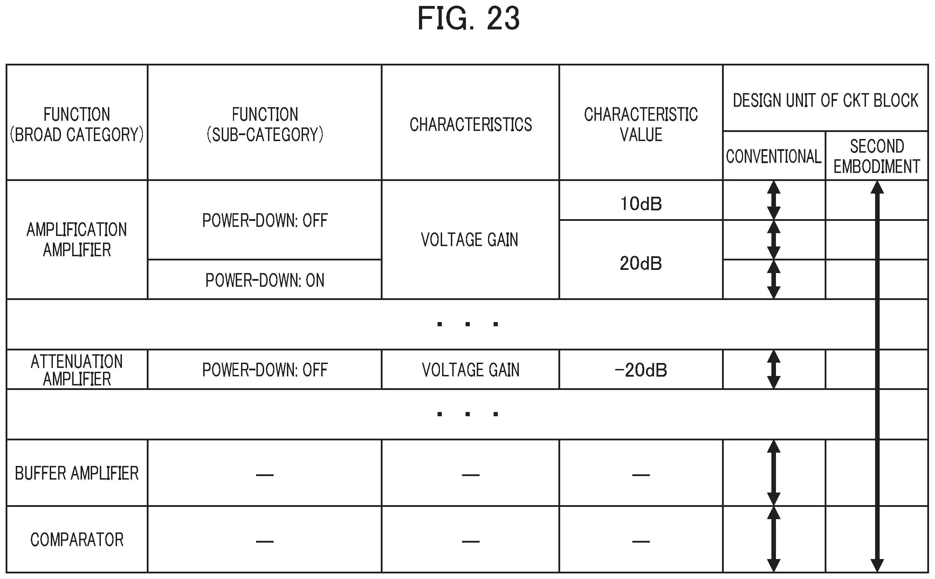

Fig. 23 is a diagram showing a relation between "function", "characteristics", "characteristic values" realized by the functional circuit, using an operational amplifier as an example.

As described above, examples of the functions (broad categories) realized in a basic circuit by the operational amplifier include, for example, the "amplification amplifier", the "attenuation amplifier", the "buffer amplifier", and the "comparator".

In addition, as a function (sub-category) of the "amplification amplifier" and the "attenuation amplifier", an example of category is given whether a power-down mode is on or off.

Here, generally, the operational amplifier is designed to operate with a certain range of a power supply voltage, and particularly, in an operational amplifier with a power-down function, a mode can be set that limits a power supply current to a predetermined value or less. The power-down function enables low power consumption, for example, during driving of a battery.

In the amplification amplifier, the characteristic is a voltage gain, and a base pattern (a circuit pattern fabricated up to the pre-interconnect process) is designed so that the characteristic value can be changed to, for example, 10 dB or 20 dB. Similarly, in the attenuation amplifier, the characteristic is a voltage gain, and it is designed so that the characteristic value can be changed to, for example, - 20 dB.

The configuration of the same operational amplifier is regarded as a basic circuit, and when a passive circuit having a predetermined value (resistance value) is connected to an input/output node of such a circuit in a predetermined connection form, these functions can be variably set.

However, for the analog circuit that assumes reinterconnect using conventional photomasks as described in Fig. 22, it is necessary to design the circuit pattern including the interconnect pattern, individually for each function.

In contrast, in the design method of the second embodiment, the configuration of the operational amplifier circuit is formed as a basic circuit pattern in the pre-interconnect process, and the connection with the passive circuit is changed in the post-interconnect process. Thus, for all functions, a single common pattern can be used for the circuit pattern (base pattern) that is formed on the semiconductor substrate in the pre-interconnect process.

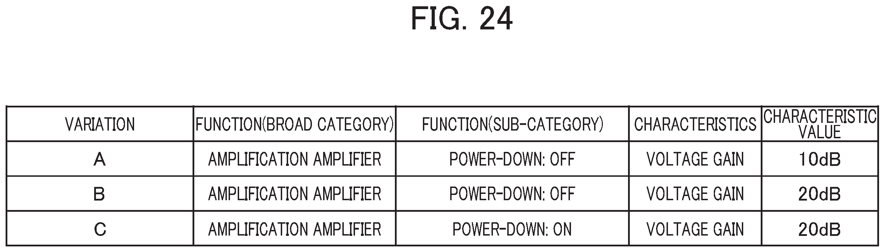

Fig. 24 is a diagram showing three design conditions with respect to an "amplification amplifier".

As shown in Fig. 24, an amplification amplifier is common as a function (broad category), but a case is assumed where conditions such as variations A, B, and C are set and designed as a function (sub-category) with the presence or absence of power-down and a voltage gain varied between 10 dB and 20 dB as a characteristic value.

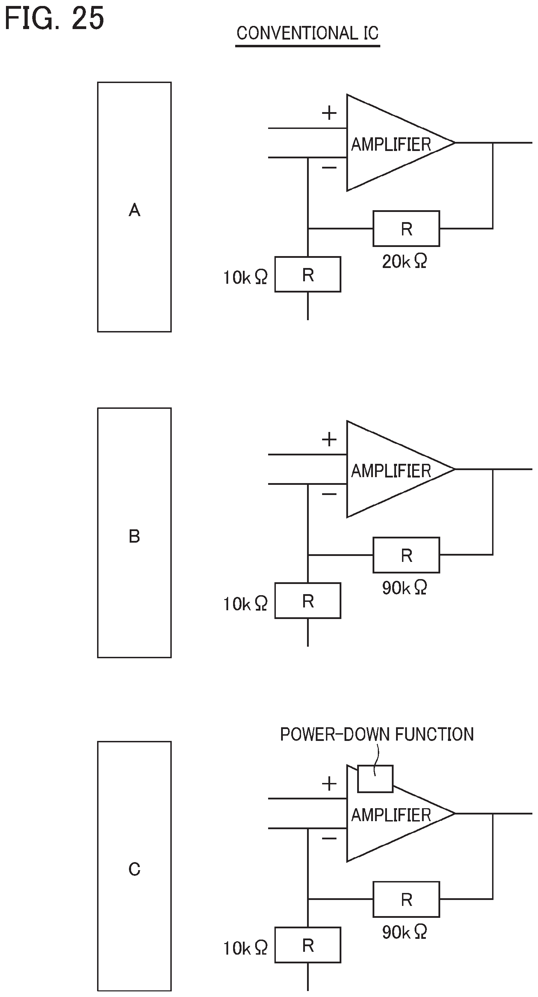

Fig. 25 is a circuit diagram showing a circuit configuration when circuits of three conditions shown in Fig. 24 are designed using a full custom method.

Variation A indicates an amplification amplifier as an analog circuit with no power-down function and a voltage gain of 10 dB.

Accordingly, as shown in Fig. 25, in a "non-inverting amplifier circuit" corresponding to variation A, when a resistance value R1 between an inverting input and a ground is set to 10 kΩ, a feedback resistance value R2 from the output to the inverting input becomes 20 kΩ.

This can be calculated back from the fact that a gain G (dB) is expressed by the following formula when an input voltage of a non-inverting amplifier circuit is defined as Vi and an output voltage is defined as Vo. [Formula 2] $G = 20 {log}_{10} \frac{{V}_{O}}{{V}_{i}} = 20 {log}_{10} \left(1+\frac{R 2}{R 1}\right)$

Similarly, in a "non-inverting amplifier circuit" corresponding to variation B, when a resistance value R1 between an inverting input and a ground is set to 10 kΩ, a feedback resistance value R2 from the output to the inverting input becomes 90 kΩ.

Furthermore, a "non-inverting amplifier circuit" corresponding to variation C has a configuration in which a power-down function is added to the "non-inverting amplifier circuit" corresponding to variation B.

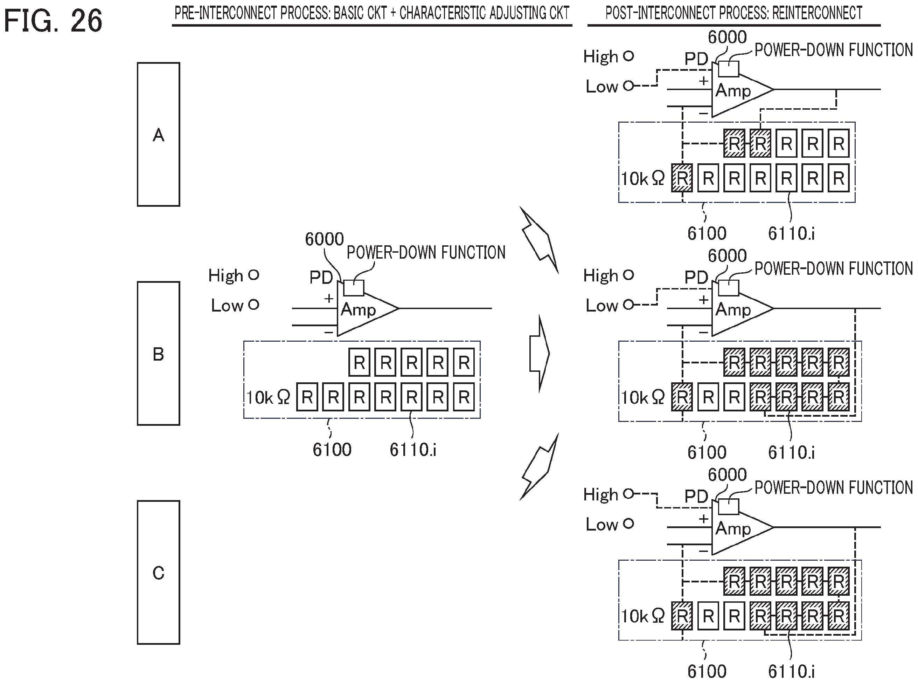

Fig. 26 is a circuit diagram showing a circuit configuration when the circuits of three conditions shown in Fig. 24 are designed using a design method of the second embodiment.

First, a basic circuit 6000 and a characteristic adjusting circuit 6100 are formed in the pre-interconnect process.

The basic circuit 6000 is an analog circuit in this example, and an operational amplifier circuit with a power-down function.

In other words, in Fig. 26, for example, among the plurality of functional circuit blocks formed in the pre-interconnect process, an "operational amplifier circuit with power-down function" is formed as a basic circuit pattern of a variable functional block of which individual functions and characteristics can be changed by the post-interconnect pattern.

The characteristic adjusting circuit 6100 is a circuit pattern for adjusting the function and characteristics based on the basic circuit pattern.

The characteristic adjusting circuit 6000 includes a plurality of first passive circuit patterns 6110.i (for example, a resistance pattern, i: a natural number). Each of these first passive circuit patterns is designed to have a first impedance value (for example, 10 kΩ). However, the first passive circuit patterns in the characteristic adjusting circuit 6100 do not necessarily have the same impedance value, and may be designed to have different values.

Variation A is an amplification amplifier with no power-down function and a voltage gain of 10 dB.

Accordingly, in the "non-inverting amplifier circuit" corresponding to variation A as shown in Fig. 26, the post-interconnect pattern in the characteristic adjusting circuit 6100 is designed so that the inverting input node is connected to the ground node via one first passive circuit pattern, with the resistance value R1 between the inverting input node and the ground node being 10 kΩ. Furthermore, the post-interconnect pattern is designed so that the output node is connected to the inverting input node via two first passive circuit patterns, with the feedback resistance value R2 from the output node to the inverting input node being 20 kΩ. In addition, a node PD of the power-down function is connected to a "Low" level to turn off the power-down function.

In Fig. 26, the post-interconnect pattern is shown by a dotted line.

In the "non-inverting amplifier circuit" corresponding to variation B, the post-interconnect pattern in the characteristic adjusting circuit 6100 is designed so that the inverting input node is connected to the ground node via one first passive circuit pattern, with the resistance value R1 between the inverting input node and the ground node being 10 kΩ. Furthermore, the post-interconnect pattern is designed so that the output node is connected to the inverting input node via nine first passive circuit patterns, with the feedback resistance value R2 from the output node to the inverting input node being 90 kΩ. In addition, the node PD of the power-down function is connected to the "Low" level to turn off the power-down function.

Furthermore, in a "non-inverting amplifier circuit" corresponding to variation C, a node PD of the power-down function is connected to a "High" level to turn on the power-down function in the "non-inverting amplifier circuit" corresponding to variation B.

In other words, it is assumed that N dies (N: a natural number) are formed on a semiconductor substrate in the pre-interconnect process, for example. In the design method of the second embodiment, as will be described below, the basic circuit pattern 6000 and the characteristic adjusting circuit pattern 6100 are connected to each other on the semiconductor substrate by a post-interconnect pattern common to at least m dies (m ≤ N, m: a natural number). In other words, on the semiconductor substrate, at least m dies are designed to have the same function and characteristics realized by the basic circuit of the variable functional block. Other dies out of the N dies may be designed to have different functions and characteristics realized by the basic circuit from those of the m dies. Alternatively, the post-interconnect pattern may be designed so that the functions and characteristics realized by the basic circuit are common for all of the N dies.

For example, it is assumed that the circuit of variation B is fabricated as trial production for the m dies on the semiconductor substrate. In this case, the post-interconnect pattern common to the m dies includes a first post-interconnect pattern that allows the plurality of first passive circuit patterns (nine in Fig. 26) specified during the design to be connected to each other, so that the functions and characteristics realized by the basic circuit of the variable functional block are common.

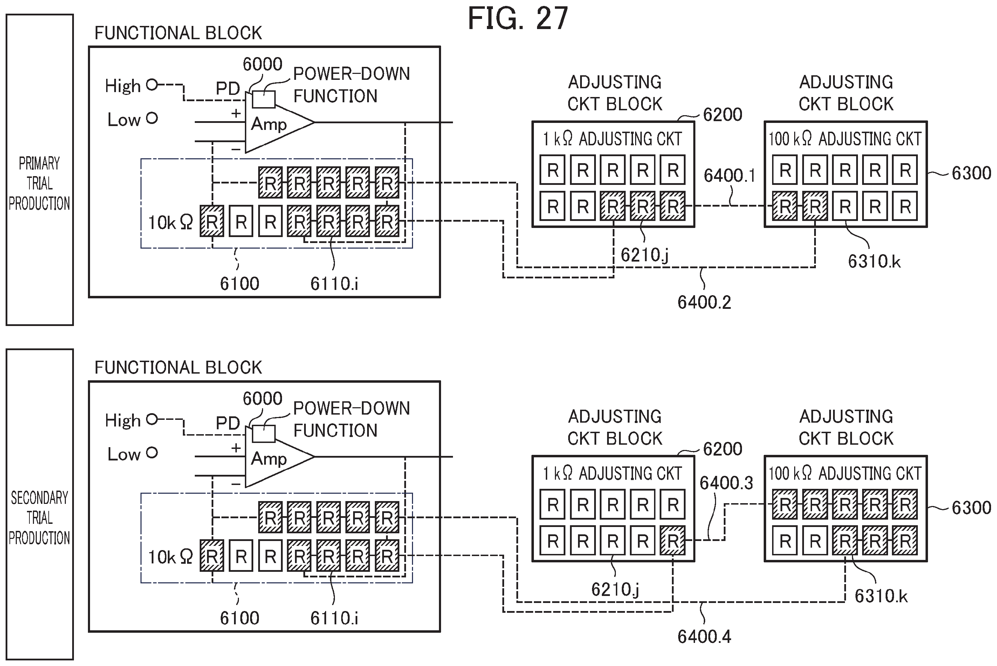

Fig. 27 is a conceptual diagram showing a functional block and an adjusting circuit block for adjusting the performance of the functional block.

As shown in Fig. 27, a plurality of circuit blocks formed on the die on the semiconductor substrate include a plurality of adjusting circuit blocks 6200 and 6300 that tune the performance realized by the functional circuit blocks, respectively. The plurality of adjusting circuit blocks 6200 and 6300 are formed separately from the plurality of functional circuit blocks, and within the die on the semiconductor substrate in which these functional circuit blocks are formed. The number of adjusting circuit blocks is not limited to such an example, and may be greater. In addition, the number of passive circuit patterns formed in the adjusting circuit blocks, and the impedance value of each of the passive circuit patterns are also not limited to an example to be described below.

Fig. 27 shows a variable functional block as an example of a functional circuit block, as described in Fig. 26. The variable functional block is formed with an "operational amplifier with a power-down function" as a basic circuit pattern. Corresponding to variation C, the post-interconnect pattern in the characteristic adjusting circuit 6100 is designed so that the inverting input node is connected to the ground node via one first passive circuit pattern, with the resistance value R1 between the inverting input node and the ground node being 10 kΩ. Furthermore, nine first passive circuit patterns are selected according to the feedback resistance value R2 from the output node to the inverting input node, and are designed to be connected with the post-interconnect pattern through the adjusting circuit block. In addition, a node PD of the power-down function is connected to a "High" level to turn on the power-down function.

The adjusting circuit block 6200 includes a plurality of second passive circuit patterns (for example, resistance patterns). Each of the second passive circuit patterns is designed to have a second impedance value (for example: 1 kΩ) smaller than the first impedance value (for example: 10 kΩ).

The adjusting circuit block 6300 includes a plurality of third passive circuit patterns (for example, resistance patterns). Each of the third passive circuit patterns is designed to have a third impedance value (for example: 100 Ω) smaller than the first impedance value (for example: 10 kΩ).

The post-interconnect pattern is common to the m dies as described above, and includes a first post-interconnect pattern provided for the nine first passive circuit patterns, and second post-interconnect patterns 6400.1 and 6400.2 that connect the second passive circuit patterns and the third passive circuit patterns to the first passive circuit patterns.

In Fig. 27, a post-interconnect pattern during primary trial production is designed to connect four first passive circuit patterns, three second passive circuit patterns, two third passive circuit patterns, and another five first passive circuit patterns in series. Thus, the feedback resistance value R2 from the output node to the inverting input node is as follows. 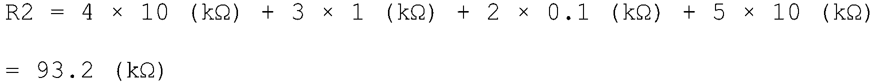 R2 = 4 × 10 (kΩ) + 3 × 1 (kΩ) + 2 × 0.1 (kΩ) + 5 × 10 (kΩ) = 93.2 (kΩ)

In the primary trial production, for the m dies, the first passive circuit pattern selected in the characteristic adjusting circuit 6100 is common, and the second passive circuit pattern selected in the adjusting circuit block 6200 and the third passive circuit pattern selected in the adjusting circuit block 6300 may also be common. Alternatively, the second passive circuit pattern selected in the adjusting circuit block 6200 and the third passive circuit pattern selected in the adjusting circuit block 6300 may be different between the dies depending on the purpose of the trial production.

After the primary trial production, the circuit characteristics are electrically evaluated. Based on this evaluation, it is determined that changes are necessary to the performance achieved by the functional block (for example, a voltage amplification ratio of the amplification amplifier).

In this case, in the secondary trial production, in order to change the performance achieved by the functional block (for example, the voltage amplification ratio of the amplification amplifier), the first post-interconnect pattern provided for the first passive circuit pattern selected in the characteristic adjusting circuit 6100 is the same as in the primary trial production, and the post-interconnect patterns connecting the second passive circuit pattern selected in the adjusting circuit block 6200 and the third passive circuit pattern selected in the adjusting circuit block 6300 are changed in design to become second post-interconnect patterns 6400.3 and 6400.4.

As shown in Fig. 27, in the secondary trial production, the post-interconnect pattern is designed to connect four first passive circuit patterns, one second passive circuit pattern, eight third passive circuit patterns, and five first passive circuit patterns in series. Thus, the feedback resistance value R2 from the output node to the inverting input node is as follows. 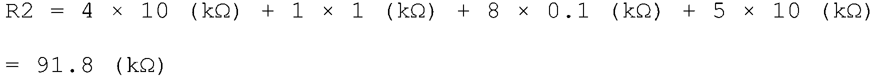 R2 = 4 × 10 (kΩ) + 1 × 1 (kΩ) + 8 × 0.1 (kΩ) + 5 × 10 (kΩ) = 91.8 (kΩ)

In this way, the design of the post-interconnect pattern formed on the semiconductor substrate stocked after the pre-interconnect process is completed changes, whereby it is possible to adjust the performance of the function achieved by the functional block, for each trial production. At this time, for example, depending on the value to be adjusted, at least one of the second passive circuit pattern of the adjusting circuit block 6200 and the third passive circuit pattern of the adjusting circuit block 6300 may be configured to have no pattern to be connected in the post-interconnect pattern.

Furthermore, the design of the post-interconnect pattern formed on the semiconductor substrate stocked after the pre-interconnect process is completed changes, and thus it is also possible to change the "function and characteristics" itself achieved by the function block.

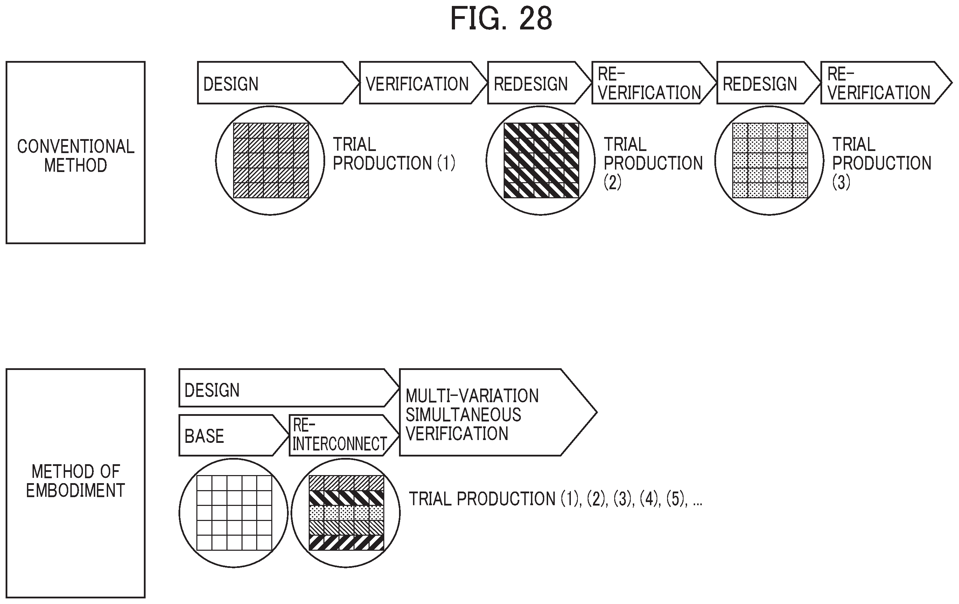

Fig. 28 is a conceptual diagram showing a course of trial production in a case of using the design method according to the second embodiment, in comparison with the conventional course of trial production.

Here, as in a conventional method, a full custom IC is exemplified in which an interconnect pattern is formed by a photomask.

In the conventional method, the circuit patterns formed on the dies on the semiconductor substrate are common during trial production. As a result, when a desired characteristic value is not obtained in trial production (1), it is necessary to form the changed circuit patterns on all dies on the semiconductor substrate again in trial production (2) and confirm the characteristic value. When a desired characteristic value is still not obtained in trial production (2), trial production (3) is performed.

In particular, there is a limit to simulation in analog circuits, and characteristic values are often different between simulation results and actual chips, so it is necessary to make trial products many times.

In other words, it is necessary to verify with a trial and error until the optimal characteristic value is obtained.

In contrast, in the design method of the second embodiment, no change is made in the circuit pattern ("base pattern") fabricated and stocked in the pre-interconnect process. Based on this premise, for example, assuming that n × m dies are formed in the semiconductor substrate, the post-interconnect pattern in the post-interconnect process can be designed and produced experimentally by changing every m dies of one row.

In this case, although not being particularly limited, a semiconductor substrate in which a base pattern is formed and stocked is selected from within a wafer bank, for example, the second passive circuit pattern selected in the adjusting circuit block 6200 and the third passive circuit pattern selected in the adjusting circuit block 6300 can be changed in n ways, one for each row of n × m dies, and thus a fabricating process can be executed. In this case, it is also possible to perform the same verification as the one in which trial production is performed n times. Such verification is called "multi-variation simultaneous verification".

The first passive circuit pattern selected in the characteristic adjusting circuit 6100 may be common for all dies or may be configured differently for rows of dies.

In other words, in the design method of the embodiment, the post-interconnect process is performed by direct drawing and re-interconnect, whereby multi-variation can be simultaneously tested and device characteristics can be verified at the same time. Therefore, the work period of the redesign process for adjustment can be significantly shortened compared with the conventional method.

Unlike digital processing that handles signals of "0" or "1", the above-described analog circuit is necessary to handle changes in fine signals as a target and thus has a high level of design difficulty. By enabling such "multi-variation simultaneous verification", the development period of the analog circuit or the mixed signal circuit of the analog circuit and the digital circuit is greatly shortened.

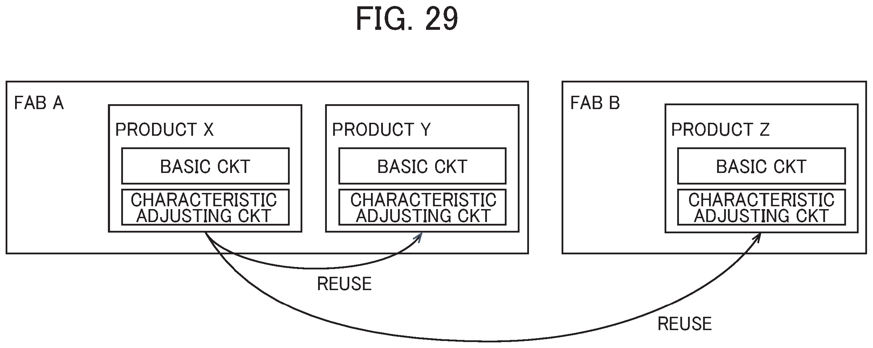

Fig. 29 is a conceptual diagram illustrating an aspect in which design data is reused or utilized again within or between foundries.

Conventionally, for a "functional circuit" used to fabricate a product X in one foundry (fab A), it was necessary to redesign the "functional circuit" from scratch when fabricating a product Y having different characteristics required even within the same foundry.

However, when the design method of the second embodiment is used, it is possible to reuse most of the design data of the "functional circuit" used to fabricate the product X at fab A for designing and fabricating the product Y at fab A as it is. In addition, most of the design data of the "functional circuit" used to fabricate the product X at fab A can be reused as-is for designing and fabricating the product Z at fab B as it is.

Even in this sense, it is possible to shorten the work period required for the design.

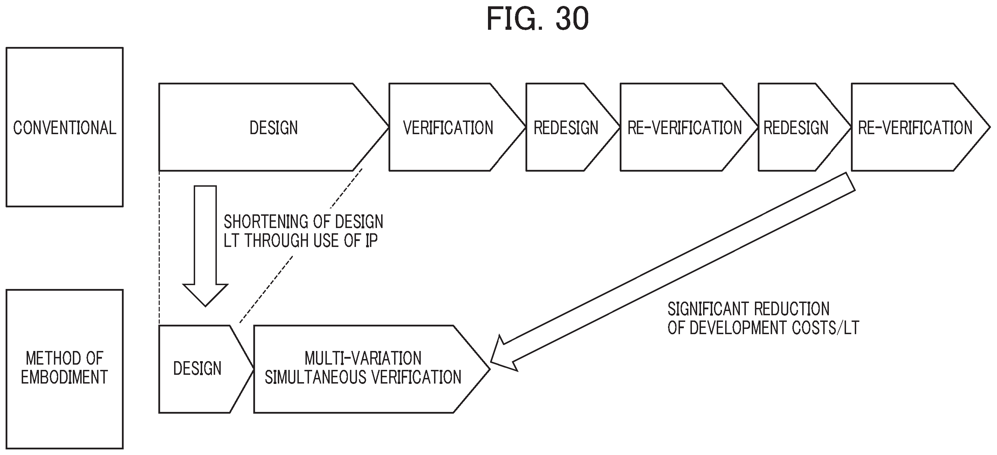

Fig. 30 is a conceptual diagram showing an effect according to the design method of the embodiment.

As described in Fig. 28, the design method of the embodiment allows for the reuse of design IP, as shown in Fig. 29, which not only shortens a design lead time (LT), but also enables "multi-variation simultaneous verification", whereby it is possible to reduce development costs and significantly reduce the lead time required for development.

The embodiments disclosed herein are illustrative of configurations for specifically carrying out the present invention, and do not limit the technical scope of the present invention. The technical scope of the present invention is indicated by the claims rather than by the description of the embodiments, and modification within the literal scope and equivalent meaning of the claims are intended.

### EXPLANATION OF REFERENCE NUMERALS

1000 functional circuit design tool providing server, 1002 communication interface, 1100 arithmetic processing unit, 1200 memory, 1110 fabricated semiconductor acquisition module, 1120 individual function setting module, 1130 adjusting circuit setting module, 1140 IP core selection module, 1150 foundry selection module, 1160 logic circuit design module, 1170 circuit pattern design module, 1180 mask pattern generation module, 1500, 1600 memory device, 2000 post-interconnect design tool providing server, 2002 communication interface, 2100 arithmetic processing unit, 2200 memory, 2110 fabricated semiconductor acquisition module, 2120 individual function setting module, 2130 adjusting circuit setting module, 2140 IP core selection module, 2150 foundry selection module, 2160 logic circuit design module, 2170 circuit pattern design module, 2180 drawing data generation module, 2200, 2300, 2500 memory device, 5000.1 to 5000.P, 5000.1 to 5000.Q designer terminal, 6000 basic circuit, 6100 characteristic adjusting circuit, WFFAB.1 to WFFAB.N functional circuit formation foundry, WLFAB.1 to WLFAB.M post-interconnect process foundry, WBANK wafer bank, ASFAB.1 to ASFAB.L assembly process foundry.

## Claims

1. A design support system that provides a tool for supporting circuit design of a semiconductor device to be fabricated in cooperation with a plurality of semiconductor fabricating sites, the plurality of semiconductor fabricating sites including a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules,
the design support system comprising:
a first design support apparatus that supports design of a circuit pattern to be formed on each of a plurality of dies on a semiconductor substrate in the pre-interconnect process,
wherein each of the dies includes a plurality of circuit blocks,
wherein the plurality of circuit blocks include a plurality of functional circuit blocks that implement a plurality of individual functions constituting an overall function of the semiconductor device on the semiconductor substrate, and the plurality of functional circuit blocks include a plurality of stock circuit blocks having design information previously prepared, based on the first design rules, for circuit patterns corresponding to fabricating processes of each of the first semiconductor fabricating sites,
wherein the first design support apparatus includes a first design support unit that selects a predetermined number of stock circuit blocks from the plurality of stock circuit blocks to implement the overall function, and supports design for arranging the selected stock circuit blocks on the semiconductor substrate; and
the design support system further comprising a second design support apparatus that supports design of a post-interconnect pattern in a post-interconnect process for selectively connecting the plurality of circuit blocks formed in the pre-interconnect process,
wherein the second design support apparatus includes a second design support unit that selects the second semiconductor fabricating site in accordance with the fabricating process for fabricating the selected plurality of stock circuit blocks, and supports logic design and pattern design for the post-interconnect process under the second design rules corresponding to the first design rules of the selected stock circuit blocks.

2. The design support system according to claim 1, wherein the plurality of circuit blocks include a plurality of adjusting circuit blocks provided separately from the plurality of functional circuit blocks on the semiconductor substrate and configured to tune performance achieved by each of the functional circuit blocks.

3. The design support system according to claim 2, wherein the plurality of functional circuit blocks include at least one custom circuit block having design information about a circuit pattern that a user designs based on the first design rules of the selected first semiconductor fabricating site, and
the first design support apparatus includes a memory device that stores a correspondence relation that respectively associates the plurality of semiconductor fabricating sites with a plurality of circuit design core groups including the plurality of functional circuit blocks, according to fabricating processes at the plurality of semiconductor fabricating sites, and
the first design support unit supports logic design and pattern design for the custom circuit block under the first design rules corresponding to the first semiconductor fabricating site selected according to the circuit design core group.

4. The design support system according to claim 3, wherein the first design support unit prompts the user to design the custom circuit block when determining that the plurality of stock circuit blocks are insufficient to achieve the overall performance.

5. The design support system according to claim 3, wherein the correspondence relation includes:
a first correspondence relation with respect to the functional circuit blocks corresponding to each of the plurality of individual functions to constitute the overall function, and
a second correspondence relation between performance specifications for the individual functions of the functional circuit blocks and the plurality of circuit design core groups for implementing each of the performance specifications, and
each of the circuit design core groups includes design information about the stock circuit block for defining a preset individual circuit pattern capable of implementing the performance specifications for at least one selected from the individual functions.

6. The design support system according to claim 5, wherein the first design support module includes
a core group selecting unit that selects the circuit design core group including a combination of the functional circuit blocks capable of implementing the overall function, and
a design unit that specifies a first semiconductor fabricating site corresponding to the selected circuit design core group among the plurality of semiconductor fabricating sites, and executes logic design and pattern design based on the first design rules of the specified first semiconductor fabricating site.

7. The design support system according to claim 2, wherein the first design support apparatus includes a mask pattern generation unit that generates, in at least a portion of a pattern transfer process at the first semiconductor fabricating site, pattern data for an optical mask for performing a lithographic exposure of dies for forming the semiconductor devices on the semiconductor substrate, using a step-and-repeat projection exposure method, and
the second design support apparatus includes a drawing data generation unit that generates, in a pattern transfer process at the second semiconductor fabricating site, drawing data for forming interconnect patterns that connect the circuit blocks on the semiconductor substrate.

8. The design support system according to claim 7, wherein the first design rules of the selected stock circuit blocks include an overlap margin at connection portions of via holes for connecting interconnects formed in the pre-interconnect process and interconnects formed in the post-interconnect process based on the second design rules.

9. The design support system according to claim 7, wherein the drawing data generated by the drawing data generation unit includes data for different interconnect patterns in the post-interconnect process for dies having common patterns of the functional circuit blocks and the adjusting circuit blocks out of the plurality of dies.

10. The design support system according to claim 9, wherein the dies having the common patterns include a first die and a second die, the different interconnect patterns are interconnect patterns that connect the common functional circuit blocks to the adjusting circuit blocks respectively different between the first die and the second die.

11. The design support system according to claim 1, wherein the plurality of functional circuit blocks include variable functional blocks capable of changing characteristics of the individual functions by the post-interconnect patterns,
each of the variable functional blocks includes a basic circuit pattern for implementing the individual function and characteristic adjusting circuit patterns for adjusting the characteristics based on the basic circuit pattern, and
the second design support unit supports design for connecting the basic circuit pattern and the characteristic adjusting circuit patterns using the post-interconnect patterns common to a predetermined number of the dies on the semiconductor substrate.

12. The design support system according to claim 11, wherein the characteristic adjusting circuit patterns include a plurality of first passive circuit patterns, each of the first passive circuit patterns being designed to have a first impedance value, and
the post-interconnect patterns common to the dies include first post-interconnect patterns that connect to each other the plurality of first passive circuit patterns in the number specified during the design.

13. The design support system according to claim 12, wherein the plurality of circuit blocks further include a plurality of adjusting circuit blocks for tuning performance achieved by each of the functional circuit blocks, and the plurality of adjusting circuit blocks are provided on the semiconductor substrate separately from the plurality of functional circuit blocks.

14. The design support system according to claim 13, wherein the plurality of adjusting circuit blocks include a plurality of second passive circuit patterns, each of the second passive circuit patterns being designed to have a second impedance value smaller than the first impedance value, and
the post-interconnect patterns include the first post-interconnect patterns common to the predetermined number of dies, and second post-interconnect patterns that differ among the predetermined number of dies and connect the second passive circuit patterns to the first passive circuit patterns.

15. The design support system according to any one of claims 11 to 14, wherein the basic circuit pattern is an analog circuit.

16. A design support method for allowing a computer to operate a tool for supporting circuit design of a semiconductor device fabricated in cooperation with a plurality of semiconductor fabricating sites, the plurality of semiconductor fabricating sites including a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules, the computer including a processor and a memory device, the memory device storing design information about a plurality of circuit blocks, the plurality of circuit blocks including a plurality of functional circuit blocks that implement a plurality of individual functions constituting an overall function of the semiconductor device on the semiconductor substrate, the plurality of functional circuit blocks including a plurality of stock circuit blocks having design information previously prepared, based on the first design rules, for circuit patterns corresponding to fabricating processes of each of the first semiconductor fabricating sites, the design support method comprising the steps of:
selecting, by the processor, a predetermined number of stock circuit blocks from the plurality of stock circuit blocks to implement the overall function and supporting design of circuit patterns in the pre-interconnect process for forming a plurality of circuit blocks on the semiconductor substrate; and
supporting design of post-interconnect patterns in a post-interconnect process for selectively connecting the plurality of circuit blocks formed in the pre-interconnect process, wherein
the supporting the design of the post-interconnect patterns includes selecting the second semiconductor fabricating site according to a fabricating process for fabricating the selected plurality of stock circuit blocks, and supporting logic design and pattern design for the post-interconnect process under the second design rules corresponding to the first design rules of the selected stock circuit blocks.

17. A design support apparatus that supports a design of a pre-interconnect process in a design support system that provides a tool for supporting circuit design of a semiconductor device fabricated in cooperation with a plurality of semiconductor fabricating sites, wherein the plurality of semiconductor fabricating sites include a plurality of first semiconductor fabricating sites that are in charge of a pre-interconnect process in a first fabricating process under first design rules, and at least one second semiconductor fabricating site that is in charge of a post-interconnect process in a second fabricating process under second design rules different from the first design rules, the design support apparatus comprising:
a memory device that stores design information about a plurality of circuit blocks necessary for design support,
wherein the plurality of circuit blocks include a plurality of functional circuit blocks that implement a plurality of individual functions constituting an overall function of the semiconductor device on the semiconductor substrate, and the plurality of functional circuit blocks include a plurality of stock circuit blocks having design information previously prepared, based on the first design rules, for circuit patterns corresponding to fabricating processes of each of the first semiconductor fabricating sites,
the design support apparatus further comprising a processor that executes design support processing based on the information stored in the memory device, and
wherein the processor is configured to:
select a predetermined number of stock circuit blocks from the plurality of stock circuit blocks to implement the overall function and support design for arranging the circuit patterns in the pre-interconnect process on the semiconductor substrate; and
store design information about an arrangement of the circuit patterns in the pre-interconnect process in a predetermined shared storage region for a design process of a post-interconnect process to selectively connect a plurality of circuit blocks formed in the pre-interconnect process.

18. The design support system according to claim 17, wherein the design support apparatus includes a mask pattern generation unit that generates, in at least a portion of a pattern transfer process at the first semiconductor fabricating site, pattern data for an optical mask for performing a lithographic exposure of dies for forming the semiconductor devices on the semiconductor substrate, using a step-and-repeat projection exposure method, and
a pattern transfer process at the second semiconductor fabricating site is a process of directly drawing interconnect patterns that connect the circuit blocks on the semiconductor substrate.

19. The design support system according to claim 18, wherein the first design rules of the selected stock circuit blocks include an overlap margin at connection portions of via holes for connecting interconnects formed in the pre-interconnect process and interconnects formed in the post-interconnect process based on the second design rules.

20. A design support apparatus that supports design of a post-interconnect process corresponding to design of a pre-interconnect process in a design support system that provides a tool for supporting circuit design of a semiconductor device fabricated in cooperation with a plurality of semiconductor fabricating sites, wherein the plurality of semiconductor fabricating sites include a plurality of first semiconductor fabricating sites that are in charge of the pre-interconnect process in a first fabricating process under first design rules, and at least one second semiconductor fabricating site that is in charge of the post-interconnect process in a second fabricating process under second design rules different from the first design rules,
the design support apparatus comprising:
a memory device that stores stock information about a plurality of semiconductor substrates stocked after completion of formation of a plurality of circuit blocks for each of a plurality of dies in the pre-interconnect process,
wherein the plurality of circuit blocks include, on the semiconductor substrate, a plurality of functional circuit blocks that implement a plurality of individual functions constituting an overall function of the semiconductor device, and the plurality of functional circuit blocks include a plurality of stock circuit blocks having design information previously prepared, based on the first design rules, for circuit patterns corresponding to fabricating processes of each of the first semiconductor fabricating sites,
wherein the stocked plurality of semiconductor substrates are semiconductor substrates having circuit patterns formed in the pre-interconnect process on the semiconductor substrates for a predetermined number of stock circuit blocks selected from the plurality of stock circuit blocks to implement the overall function,
the design support apparatus further comprising
a processor that executes design support processing based on the information stored in the memory device, and wherein
the processor is configured to:
select, based on the stock information, the semiconductor substrates to be processed in the post-interconnect process; and
support design of design process of post-interconnect patterns of the post-interconnect process for selectively connecting a plurality of circuit blocks formed in the pre-interconnect process.

21. The design support apparatus according to claim 20,
wherein the design support apparatus includes a direct drawing pattern generation unit that generates, in a pattern transfer process at the second semiconductor fabricating site, direct drawing data for transferring interconnect patterns of dies on which the semiconductor devices are to be formed on the semiconductor substrate, using a direct drawing method., using a direct drawing method.

22. The design support apparatus according to claim 20,
wherein the plurality of functional circuit blocks include variable functional blocks capable of changing characteristics of the individual functions by the post-interconnect patterns,
each of the variable functional blocks includes a basic circuit pattern for implementing the individual functions and characteristic adjusting circuit patterns for adjusting the characteristics based on the basic circuit pattern, and
the design support unit supports design for connecting the basic circuit pattern and the characteristic adjusting circuit patterns using the post-interconnect pattern common to a predetermined number of dies on the semiconductor substrate.

23. The design support apparatus according to claim 22,
wherein the characteristic adjusting circuit patterns include a plurality of first passive circuit patterns, each of the first passive circuit patterns being designed to have a first impedance value, and
the post-interconnect patterns common to the dies include first post-interconnect patterns that connect the plurality of first passive circuit patterns to each other in the number specified during the design.

24. The design support apparatus according to claim 23,
wherein the plurality of circuit blocks further include a plurality of adjusting circuit blocks for tuning performance achieved by each of the functional circuit blocks, and the plurality of adjusting circuit blocks are provided on the semiconductor substrate separately from the plurality of functional circuit blocks.

25. The design support apparatus according to claim 24,
wherein the plurality of adjusting circuit blocks include a plurality of second passive circuit patterns, each of the second passive circuit patterns being designed to have a second impedance value smaller than the first impedance value, and
the post-interconnect patterns include the first post-interconnect patterns common to the predetermined number of dies, and second post-interconnect patterns that differ among the predetermined number of dies and connect the second passive circuit pattern to the first passive circuit pattern.
